(19) Europäisches Patentamt

European Patent Office

Office européen des brevets

(11) **EP 0 997 256 A1**

(12) **EUROPEAN PATENT APPLICATION**
published in accordance with Art. 158(3) EPC

(43) Date of publication:
03.05.2000 Bulletin 2000/18

(51) Int. Cl.$^7$: **B29C 45/14**, B29C 45/76

(21) Application number: 98923101.4

(86) International application number:
PCT/JP98/02450

(22) Date of filing: 03.06.1998

(87) International publication number:
WO 99/03664 (28.01.1999 Gazette 1999/04)

(84) Designated Contracting States:
AT DE GB

(30) Priority: 18.07.1997 JP 19388997

(71) Applicant: Ube Industries, Ltd.
Ube-shi, Yamaguchi-ken 755-0052 (JP)

(72) Inventors:
• OKAMOTO, Akio,
UBE Ind., Ltd,
Machin.Engineerging
Yamaguchi-prefecture 755-863 (JP)

• OKAHARA, Etsuo,
UBE Ind.,Ltd,
Polymer Laboratory
Yamaguchi-prefecture 755-8633 (JP)

(74) Representative:
Paget, Hugh Charles Edward et al
MEWBURN ELLIS
York House
23 Kingsway
London WC2B 6HP (GB)

(54) **METHOD AND DEVICE FOR MULTILAYER MOLDING OF RESIN**

(57)     A resin multilayer molding method in which a skin material having a resin decorating layer on a surface and a core-material resin are integrally molded in a mold, includes the steps of: presetting a relationship of a glass transition point (Tgs) of the resin decorating layer of the skin material and a supply temperature (Tc) of a molten resin forming a core material to satisfy Tgs<Tc, and performing molding on a condition that a maximum temperature (Tsm) of the resin decorating layer of the skin material being molded satisfies Tsm>Tgs. Within a temperature range in which a temperature (Tcc) of the core-material resin being molded satisfies Tcc≥Tgs at the preset arbitrary time, the gap is made between the resin decorating layer of the skin material and the mold cavity face opposed to the resin decorating layer to form and retain the air insulating layer. Remarkably high-quality resin multilayer molded products can be stably supplied at low cost without impairing surface decorating performance.

FIG.1

EP 0 997 256 A1

**Description**

Technical Field

The present invention relates to a resin multilayer molding method and a multilayer molding device in which a skin material having a resin decorating layer on a surface and a core-material resin are integrally molded in a mold.

Background Art

Recently, for resin molded products for use in automobile, household appliances, building materials, and the like, in order to enhance a surface decorative quality by applying added values such as decorativeness, good feel, cushioning properties, and the like and to reduce costs by saving molding processes, resin multilayer molding has been performed in which a decorating skin material having surface decorating performance such as the decorativeness, the good feel, the cushioning properties, and the like is integrally formed on a surface of a core resin using injection molding or press molding as described later in a mold simultaneously with molding of the core resin.

After the decorating skin material is set between opened mold pieces, in a clamped sate in which a clamping force is exerted by closing the mold or in a clamped state in which a specified mold open quantity is kept between the mold pieces, a mold cavity space formed by the decorating skin material and the mold is filled with a core material or molten resin by an injection device, a resin supply unit, or the like. After the filling of the core-material resin, the mold is loaded with a follow-up pressure by the injection device or the clamping device to integrally mold the decorating skin material and the core-material resin, and the mold is opened after an elapse of a predetermined cooling time to take a molded product therefrom.

However, the decorating skin material is largely damaged by loading of high temperature and pressure by the core-material resin from when the mold is filled with the core material or molten resin till the mold is opened to take the molded product. A problem is caused that even when the decorating skin material with a foaming layer laminated on its back surface is used aiming at, for example, softness and cushioning properties, the foaming layer collapses during molding, and the softness, the cushioning properties, or another expected surface decorating performance cannot be obtained.

Another problem is caused that even when the decorating skin material provided with a gigging layer on its surface is used aiming at, for example, good feel and high grading, the gigging layer falls during molding, and the good feel, the high grading, or another expected surface decorating performance cannot be obtained.

Further problem is caused that even when the decorating skin material with a printed or painted layer laminated on its surface is used aiming at, for example, decorativeness or painting properties, microfine scratches made in the manufacture process of the skin material or microfine strains made at the time of deformation along a mold configuration during molding cannot be avoided, which results in surface defects such as tarnish, color shading, and the like. The decorativeness, the painting properties, or another expected surface decorating performance cannot be obtained.

As aforementioned, even when the decorating skin material is used for the purpose of enhancement of the added values such as decorativeness, good feel, cushioning properties, and the like, the originally targeted surface decorating performance cannot be obtained.

Means for solving the above-mentioned problems include a method in which a decorating skin material with a film having heat/pressure resistance or another protective layer laminated thereon is used. The method is designed to moderate influences of heat and pressure loads from the core-material resin during molding with the protective layer, but the manufacture cost of the decorating skin material is increased, the decorating skin material is only incompletely protected, and the target surface decorating performance cannot be satisfied.

As another means for solving the above-mentioned problem, in the case where the printed or painted layer is laminated on the surface of the decorating skin material aiming at decorativeness and painting properties, the decorating skin material is outlined/performed into a molded product configuration at a high temperature before molding. In this method, in the preforming process at the high temperature, the microfine scratches made in the manufacture process of the skin material or the microfine strains made at the time of deformation along the mold configuration during molding can be avoided to some degree, but incompletely. Furthermore, since the preforming process is added and a separate preforming facility is necessary, the cost of resin multilayer molding and the space for performing the molding are increased.

As new means for solving the above-mentioned problems, Japanese Patent Application Laid-open No. 150740/1984 proposes a low-pressure molding method in which the pressure loaded to the decorating skin material is minimized during the resin multilayer molding using press molding. Moreover, for example, Japanese Patent Application Laid-open No. 297489/1994 proposes a molding method in which the temperature of core-material molten resin is lowered, the pressure loaded on the decorating skin material is reduced, and the product of the pressure loaded on the decorating skin material during molding and running hours is further minimized. Both proposals are designed to suppress the damage of the decorating skin material being molded by reducing influences of pressure and heat loaded on the decorating skin material.

However, even if the damage of the decorating skin material can be suppressed by reducing the pressure loaded on the decorating skin material or reducing the product of pressure and time, a moldable, necessary minimum pressure exists for molding of the core-material resin. Consequently, a shortage of molding pressure of the core-material resin causes deformation, warpage, short shot, or other molding defects in view of products.

Moreover, in the method in which the temperature of the core-material molten resin is lowered, since the fluidity of the core-material resin is extremely lowered, the pressure at the time of molding of the core-material resin is extremely lowered, the pressure at the time of molding of the core-material molten resin (filling and flowing pressures) is inevitably enlarged, and the pressure loaded on the decorating skin material fails to drop. As a result, the molding method is a contradictory (actually invalid) proposal. Even if the method can be realized, the shortage of molding pressure of the core-material resin causes deformation, warpage, short shot, or other molding defects in view of products.

To perform molding by minimizing the loaded pressure and heat influences is certainly desirable in order to control the damage of the decorating skin material during molding, but this is a molding condition in which molding cannot be performed in view of the moldability of the core-material resin. Specifically, in the resin multilayer molding of resin using the decorating skin material, contradictory molding controls for preventing the decorating skin material from being damaged and for enhancing the moldability of the core-material resin have to be simultaneously performed during molding. Not only in the case where the conventional injection molding and press molding are used, but also in the molding control simply using the proposed low-pressure molding, molding cannot be performed with both controls being compatible.

Therefore, an object of the present invention is to provide a resin multilayer molding method and a multilayer molding device which can solve the conventional problems described above.

Another object of the present invention is to provide a resin multilayer molding method and a multilayer molding device which can supply remarkably high-quality resin multilayer molded products stably at low cost without impairing surface decorating performance.

Disclosure of Invention

According to the present invention, it is provided a resin multilayer molding method in which a skin material having a resin decorating layer on a surface and a core-material resin are integrally molded in a mold, comprising the steps of:

presetting a relationship of a glass transition point (Tgs) of the resin decorating layer of the skin material and a supply temperature (Tc) of a molten resin forming a core material to satisfy Tgs<Tc, and performing molding on a condition that a maximum temperature (Tsm) of the resin decorating layer of the skin material during molding satisfies Tsm>Tgs; and

within a temperature range in which a temperature (Tcc) of the core-material resin during molding satisfies Tcc≥Tgs at a preset arbitrary time, making a gap between the resin decorating layer of the skin material and a mold cavity face opposed to the resin decorating layer to form and retain an air insulating layer.

In the present invention, it is further preferable that within a temperature range in which the temperature (Tcc) of the core-material resin during molding satisfies Tcc≥Tsm and Tcc≥Tgs at a preset arbitrary time, a gap is formed between the resin decorating layer of the skin material and the mold cavity face opposed to the resin decorating layer to form and retain an air insulating layer.

Furthermore, in the present invention, after the air insulating layer is formed, within a temperature range in which the temperature (Tsc) of the resin decorating layer of the skin material satisfies Tsc≥Tgs at a preset arbitrary time, the mold is closed to eliminate the air insulating layer and retained.

Moreover, according to the present invention, it is provided a resin multilayer molding method in which a skin material having a resin decorating layer on a surface and a core-material resin are integrally molded in a mold, comprising the steps of:

at a preset arbitrary time after a molten resin forming a core material is supplied, using heating means incorporated inside the mold or heating means attached outside the mold, and heating the resin decorating layer of the skin material to a glass transition point (Tgs) or a higher temperature and subsequently making a gap between the resin decorating layer of the skin material and a mold cavity face oppposed to the resin decorating layer to form an air insulating layer, or forming the air insulating layer and subsequently heating the resin decorating layer of the skin material to Tgs or a higher temperature, or heating and simultaneously forming the air insulating layer, to retain the air insulating layer.

In the multilayer molding method, after the air insulating layer is formed, within a temperature range in which a temperature (Tsc) of the resin decorating layer of the skin material satisfies Tsc≥Tgs at a preset arbitrary time, the mold is preferably closed to eliminated the air insulating layer and retained.

Additionally, in a case where injection molding is used as the molding method, after an injection filling condition for injection filling the molten resin forming the core material into a mold cavity space and refilling a cooling/setting shrinkage quantity, a clamping condition, during injection filling, the thickness of the air insulating layer, a change-over timing condition for forming the air insulating layer, and a change-over timing condition for eliminating the air insulating layer are initially set as molding condition, trial molding and visual quality determination by an operator are performed. In a case where the molding conditions need to be changed based on visual quality determination results, the molding conditions are preferably corrected using a prepared correction program to set optimum molding conditions for preventing the resin decorating layer of the skin material being molded from being damaged.

Moreover, in the present invention, after the injection filling condition for injection filling the molten resin forming the core material into the mold cavity space and refilling the cooling/setting shrinkage quantity, the clamping condition during injection filling, the thickness of the air insulating layer, the change-over timing for forming the air insulating layer, the change-over timing for eliminating the air insulating layer, and a heating condition for using heating means to heat the resin decorating layer of the skin material are initially set as molding conditions, the trial molding and the visual quality determination by the operator are performed. In a case where the molding conditions need to be changed based on visual quality determination results, the molding conditions are preferably corrected using the prepared correction program to set optimum molding conditions for preventing the resin decorating layer of the skin material being molded from being damaged.

Furthermore, in the present invention, it is preferable that a minimum thickness (Lm) of the resin decorating layer of the skin material being molded, a thickness (Lf) of the resin decorating layer after molding which satisfies the required surface decorating performance of a multilayer molded product and a thickness La of the air insulating layer have a relationship Lf-Lm≤La>O.

Moreover, in the present invention, the skin material is preferably a lamination of a resin decorating layer which is formed by laminating a surface decorating layer portion constituted of a resin film, a resin woven fabric, a resin nonwoven fabric, and a resin raised woven or nonwoven fabric singly or in a combined manner and an intermediate decorating layer portion constituted of a foaming resin on a back surface of the surface decorating layer portion as needed in accordance with a surface decorating purpose, and a base layer constituted of a resin film, a resin woven fabric or a resin nonwoven fabric or a combination thereof as needed.

Additionally, it is preferable that the temperature of the core-material resin and the temperature of the resin decorating layer of the skin material during molding are detected, while the change-over timing for forming the air insulating layer and the change-over timing for eliminating the air insulating layer are controlled with a detected temperature signal.

Furthermore, the change-over timing control for forming the air insulating layer and the change-over timing control for eliminating the air insulating layer are preferably performed with a time-out signal of a timer which starts at an arbitrary time during molding.

Still furthermore, the correction program is preferably provided with a function of selecting an item required to be corrected from the initially set molding condition values based on the present correction direction and quantity corresponding to an quality defect item and a quality defect degree which are obtained from operator's visual quality determination results; a function of correcting the set value of the selected set item; and a function of issuing an operation command for changing supplementary molding conditions constituted of a mold temperature, a core-material resin temperature, and the like, when the corrected set value reaches a preset critical correction value.

In the present invention, the mold with an insulating cavity layer formed on the mold cavity face opposed to the resin decorating layer of the skin material is preferably used.

The present invention also provides a resin multilayer molding device in which a skin material having a resin decorating layer on a surface and a core-material resin are integrally molded in a mold, comprising:

carrying means for carrying and setting the skin material to a predetermined position of a mold cavity and carrying a molded product to a predetermined position after molding, and supply means for supplying a molten resin forming a core material into a mold cavity space; and

a clamping condition setting section for setting/entering a clamping condition and a thickness of an air insulating layer during supply and after supply of the molten resin, a change-over timing setting section for a change-over timing condition for forming the air insulating layer and a change-over timing condition for eliminating the air insulating layer, a temperature detecting section for detecting a temperature of the core-material resin and a temperature of the resin decorating layer of the skin material during molding, a comparison control section for comparing/determining a detection signal of the temperature detecting section and a set value of the change-over timing setting section, and a clamping control section for controlling clamping means based on a signal of the comparison control section and a set value of the clamping condition setting section.

Furthermore, the present invention provides a resin multilayer molding device in which a skin material having a resin decorating layer on a surface and a core-material resin are integrally molded in a mold, comprising:

carrying means for carrying /setting the skin material to a predetermined position of a mold cavity and carrying a molded product to a predetermined position after molding, and supply means for supplying a molten resin forming a core material into a mold cavity space; and

a clamping condition setting section for setting/entering a clamping condition and a thickness of an air insulating layer during supply and after supply of the molten resin, a heating temperature condition setting section for setting a temperature to which the resin decorating layer of the skin material is heated, a heating temperature detecting section for detecting the heating temperature of the resin decorating layer of the skin material, heating means for heating the resin decorating layer of the skin material based on a set value of the heating temperature condition setting section and a detection signal of the heating temperature detecting section, and a clamping control section for controlling clamping means based on a set value of the clamping condition setting section.

The above-mentioned multilayer molding device preferably uses an injection molding device.

The multilayer molding device using the injection molding device preferably includes an initial setting input section for initially setting/entering as molding condition values an injection filling condition for injection filling the molten resin forming the core material into the mold cavity space and refilling a cooling/setting shrinkage quantity, a clamping condition during the injection filling, a thickness of the air insulating layer, a change-over timing condition for forming the air insulating layer and a change-over timing condition for eliminating the air insulating layer; a molding device control section for operating/controlling the multilayer molding device for performing resin multilayer molding based on set values of the initial setting input section; a quality determination input section for entering visual quality determination results; and a correction program storage section for storing a correction program for correcting the initially set molding condition values based on input values of the quality determination input section to set optimum molding conditions for preventing the resin decorating layer of the skin material being molded from being damaged.

Moreover, the multilayer molding device preferably includes an initial setting input section for initially setting/entering as molding condition values an injection filling condition for injection filling the molten resin forming the core material into the mold cavity space and refilling a cooling/setting shrinkage quantity, a clamping condition during the injection filling, a thickness of the air insulating layer, a change-over timing condition for forming the air insulating layer, a change-over timing condition for eliminating the air insulating layer, and a heating condition for heating the resin decorating layer of the skin material using heating means; a molding device control section for operating/controlling the multilayer molding device for performing resin multilayer molding based on set values of the initial setting input section; a quality determination input section for entering visual quality determination results; and a correction program storage section for storing a correction program for correcting the initially set molding condition values based on input values of the quality determination input section to set optimum molding conditions for preventing the resin decorating layer of the skin material being molded from being damaged.

Furthermore, the multilayer molding device preferably includes a timer which starts at an arbitrary time during molding, and a change-over timing setting section for setting the change-over timing condition for forming the air insulating layer and the change-over timing condition for eliminating the air insulating layer in response to a time-out signal of the timer, and means for forming the air insulating layer is preferably incorporated in the mold. Additionally, an insulating cavity layer is preferably formed on a cavity face opposed to the resin decorating layer of the skin material.

Furthermore, in the present invention, a conventional known method can be applied as the molding method, and injection molding, press molding, blow molding, vacuum molding and other various molding methods can be used. Among the methods, the injection molding and the press molding are preferable.

Brief Description of Drawings

Fig. 1 is a block diagram of the entire constitution of a direct pressure clamping system injection molding machine.

Fig. 2 is a block diagram of the entire constitution of an injection molding machine according to another embodiment of the present invention.

Fig. 3 is a block diagram of the entire constitution of an injection molding machine according to further embodiment of the present invention.

Fig. 4 is an explanatory view showing that an air insulating layer is formed in a mold to perform multilayer molding.

Fig. 5 is a vertical sectional view showing that a mold cavity face opposed to a resin layer of a skin material has an insulating cavity structure.

Fig. 6 is an explanatory view showing heating state by heating means which is incorporated inside the mold according to the present invention.

Fig. 7 is an explanatory view showing heating state of heating means outside the mold according to the embodiment of the present invention.

Fig. 8 is a flowchart for performing molding of a first embodiment using a resin molding device shown in Fig. 1 and 2.

Fig. 9 is flowchart for performing molding of a third embodiment using the resin molding device shown in Fig. 1.

Fig. 10 is a flowchart for performing molding of a fourth embodiment using the resin molding device shown in Fig. 2.

Fig. 11 is a flowchart for performing molding of a fifth embodiment using a resin molding device shown in Fig. 2.

Fig. 12 is a flowchart for performing molding of a sixth embodiment using the resin molding device shown in Fig. 3.

Fig. 13 is a flowchart for performing molding of a seventh embodiment using a resin molding device shown in Fig. 3.

Fig. 14 is a flowchart for performing molding of an eighth embodiment using the resin molding device shown in Fig. 1.

Best Mode for Carrying Out the Invention

The present invention will be described in detail.

For convenience of description, the invention will be described based on a case where injection molding is used as a molding method.

When the injection filling of a molten resin forming a core material is started, a resin decorating layer of a skin material is simultaneously heated by the heat quantity of the core-material molten resin. Here, since the glass transition point $Tgs$ of the resin decorating layer of the skin material and the supply temperature $Tc$ of the core-material molten resin are preset to have a relationship of $Tgs<Tc$, heating is continued until the maximum temperature $Tsm$ of the resin decorating layer of the skin material satisfies $Tsm>Tgs$. Subsequently, after the integration of the skin material and the core-material resin and the molding of the core-material resin are substantially completed, in a temperature range in which the temperature $Tcc$ of the core-material resin being molded satisfies $Tcc \geq Tgs$ at a present arbitrary time, a gap is formed between the resin decorating layer of the skin material and a mold cavity face opposed to the resin decorating layer to form an air insulating layer, and this state is retained for a predetermined time.

As aforementioned, in the temperature condition which satisfies $Tcc \geq Tgs$, the resin decorating layer of the skin material is in a temperature region in which it exhibits rubber-like elasticity, and the resin decorating layer of the skin material damaged by external forces (heat and pressure influences) during molding can restore itself by an elastic force. Furthermore, by making a gap between the resin decorating layer of the skin material and the mold cavity face opposed to the resin decorating layer, the restoration space of the resin decorating layer of the skin material is given. Additionally, since the air insulating layer is formed, the synergistic effect of time enlargement of the temperature region in which the rubber-like elasticity is indicated (i.e., the enlargement of time allowance for restoration) allows the resin decorating layer of the skin material to restore itself, so that a resin multilayer molded product without being damaged even after molding can be obtained. As a result, contradictory molding controls for the molding of the core-material resin and the damage prevention of the decorating skin material can be simultaneously achieved in a series of molding processes, and the stable supply of high-quality resin multilayer molded products can be realized without deteriorating target surface decorating performance.

Furthermore, in the case where within the temperature range in which the temperature $Tcc$ of the core-material resin being molded satisfies $Tcc \geq Tsm$ and $Tcc \geq Tgs$ at the preset arbitrary time, the gap is made between the resin decorating layer of the skin material and the mold cavity face opposed to the resin decorating layer to form and retain for the predetermined time the air insulating layer, since the self restoring capability of the skin-material resin decorating layer can further be enhanced, remarkably high-quality resin multilayer molded products can be obtained without deteriorating the original decorating performance of the skin-material resin decorating layer.

Moreover, in a case where after the air insulating layer is formed, the mold is again closed within the temperature range in which the temperature $Tsc$ of the skin-material resin decorating layer satisfies $Tsc \geq Tgs$ at the preset time, after the face transferring of the mold cavity face in a temperature state of $Tgs$ or more in which the resin decorating layer of the skin material exhibits rubber-like elasticity, cooling/setting is performed with the face transfer state being held. In this case, for example, in the combination of the skin material having the resin decorating layer of a printed or painted resin film and the mold having its cavity face specular-finished, scratches generated in the manufacture process of the skin material or surface defects such as strains generated in the deformation process during molding, and the like can be completely eliminated, so that a resin multilayer molded product having high surface gloss without any tarnish can be obtained. Moreover, for example, in the combination with the mold having its cavity face embossed, the embossed pattern on the cavity face can be exactly transferred to the resin decorating layer of the skin material. Therefore, a resin multilayer molded product which is embossed uniformly over its entire surface and has no change of the embossed pattern even on its corner portion can be obtained, as compared with a molded product obtained in the multilayer molding method using the skin material to which the embossed pattern is applied beforehand.

Additionally, in a case where the resin decorating layer of the skin material is forced to be heated to the glass transition point Tgs or a higher temperature using the heating means while the air insulating layer is formed, after the integration of the skin material and the core-material resin and the molding of the core-material resin are completely finished, the heating process and the formation of the air insulating layer can be performed. Therefore, the moldability of the core-material resin can further be enhanced, and the complete self restoration of the resin decorating layer of the skin material can be attained. In this case, even in the molding conditions in which the temperature condition satisfying the relationship of Tcc≥Tsm and Tcc≥Tgs between the temperature Tcc of the core-material resin and the maximum temperature Tsm of the resin decorating layer of the skin material during molding cannot be set, a high-quality resin multilayer molded product can be obtained without deteriorating the target surface decorating performance.

Furthermore, in the case where after the resin decorating layer of the skin material is heated to Tgs or higher by the heating mans and the air insulating layer is formed, the mold is again closed within the temperature range in which the temperature Tsc of the skin-material resin decorating layer satisfies Tsc≥Tgs at the preset time, a resin multilayer molded product having high surface gloss without any tarnish or a resin multilayer molded product having its entire surface uniformly embossed can be obtained.

Moreover, in the resin multilayer molding method described above, by also using a mold which has an insulating cavity face on its mold cavity face opposed to the resin decorating layer of the skin material, the effect of time enlargement of the temperature region in which the resin decorating layer of the skin material exhibits rubber-like elasticity at the time of formation of the air insulating layer (i.e., the enlargement of time allowance for restoration) can further be promoted. Especially, in the molding method in which the mold is closed again after the air insulating layer is formed, since the drop in the temperature of the skin-material resin decorating layer by the insulating cavity face can be prevented, the quality of a molded product can be remarkably and effectively enhanced.

Furthermore, in the resin multilayer molding method described above, by initially setting the substantial molding conditions necessary for the molding and by entering the quality determination result after the trial molding, the set value to be corrected can be selected from preset initial set values in accordance with the entered quality determination result, and the correction quantity and direction can be automatically corrected by the correction program in such a manner that a good-quality molded product can be obtained. Therefore, even an insufficiently skilled operator can easily set the optimum molding conditions, there is no dispersion in quality of the molded product by operator's skill difference, and the enhancement of productivity or other effects can be obtained by automating the optimum molding condition setting and reducing the conditioning time. As a result, remarkably high-quality resin multilayer molded products can be stably supplied without deteriorating the target surface decorating performance, and cost can be reduced by the enhancement of productivity.

Still furthermore, in addition to the resin multilayr molding method described above, the present invention provides a resin multilayer molding device which can realize the above molding method. Therefore, for any skin material in which a resin decorating layer formed by laminating a resin decorating layer portion constituted of a resin film, a resin woven fabric, a resin nonwoven fabric, and a resin raised woven or nonwoven fabric singly or in a combined manner and an intermediate decorating layer portion constituted of a foaming resin on a back surface of the surface decorating layer portion as needed in accordance with a surface decorating purpose, and a base layer constituted of a resin film, a resin woven fabric or a resin nonwoven fabric or a combination thereof as needed are laminated, contradictory molding controls for molding the core-material resin and for preventing the decorating skin material from being damaged can be achieved simultaneously in a series of molding processes. The stable supply of remarkably high-quality resin multilayer molded products can be realized without deteriorating the target surface decorating performance.

The present invention will be described in detail based on embodiments shown in the accompanying drawings.

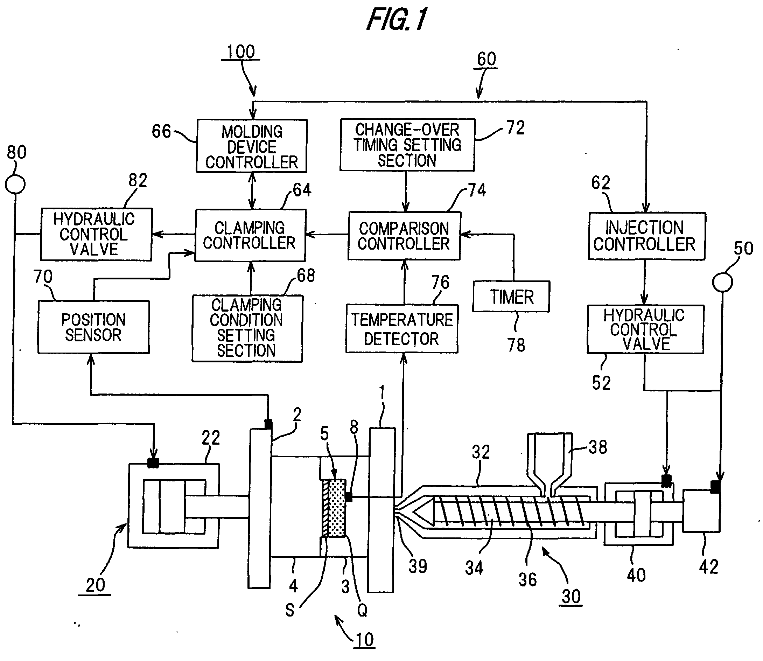

Fig. 1 is a block diagram showing the entire of a direct pressure clamping type injection molding device and, as shown in Fig. 1, a resin multilayer molding device 100 of the present invention uses a general-purpose injection molding machine and is constituted of a mold device 10, a clamping device 20, an injection device 30 and a control device 60. The mold device 10 is constituted of a fixed mold 3 attached to a fixed board 1 and a movable mold 4 attached to a movable board 2, and the movable board 2 and the movable mold 4 can be advanced or retreated by a clamping cylinder 22 of the clamping device 20.

The clamping device 20 is provided with the clamping cylinder 22 for opening or closing the molds 3 and 4 of the mold device 10, and the movable mold 4 can be guided by a tie bar (not shown) to advance or retreat relative to the fixed mold 3.

In the injection device 30, a screw 34 provided with a spirally attached screw flight 36 can rotate and advance or retreat freely in a barrel 32. When the screw 34 is operated by a hydraulic motor 42 to rotate, resin pellets supplied to a hopper 38 are fed to the front of the screw 34. During this operation, the resin pellets are heated by a heater (not shown) attached to an outer peripheral face of the barrel 32 while molten under kneading action of the rotating screw. The molten resin fed to the front of the screw 34 is pushed out toward a nozzle 39 by the screw 34 operated by an injection cylinder 40 to advance, and injected into a mold cavity 5 formed between the molds 3 and 4 via the nozzle 39.

The control device 60 will next be described. As diagrammatically shown in Fig. 1, the control device 60 is constituted of an injection controller 62, a clamping controller 64, a molding device controller 66, a clamping condition setting section 68, a position sensor 70, a change-over timing setting section 72, a comparison controller 74, a temperature detector 76 and a timer 78.

The injection cylinder 40 and the forward/reverse hydraulic motor 42 are controlled by a hydraulic control valve 52 receiving an operation command fromt he injection controller 62 to advance and rotate the screw. The molding device controller 66 connected to the injection controller 62 is also connected to the clamping controller 64.

Temperature information of a core-material resin Q measured by a temperature sensor 8 is connected to the comparison controller 74 via the temperature detector 76. Furthermore, the comparison controller 74 is connected to the clamping controller 64 and also to the change-over timing setting section 72 and the timer 78.

Additionally, in order to obtain temperature information of a resin decorating layer of a skin material S, the temperature sensor 8 is also attached on the side of the resin decorating layer.

Information measured by the position sensor 70 attached to the movable board 2 is connected via the clamping controller 64 to give an operation command to the molding device controller 66, and also connected to the clamping condition setting section 68. Furthermore, the clamping controller 64 transmits a signal to the clamping cylinder 22 of the clamping device 20 via a hydraulic control valve 82. Additionally, numeral 50 denotes a hydraulic supply on an injection circuit side, and 80 denotes a hydraulic supply on a clamping circuit side.

Moreover, in the embodiment shown in Fig. 1, the injection molding machine including the direct pressure type clamping device is used, but an injection molding machine including a toggle type clamping device, a vertical injection molding machine or an injection molding machine including an electromotive clamping device may be used.

[First Embodiment]

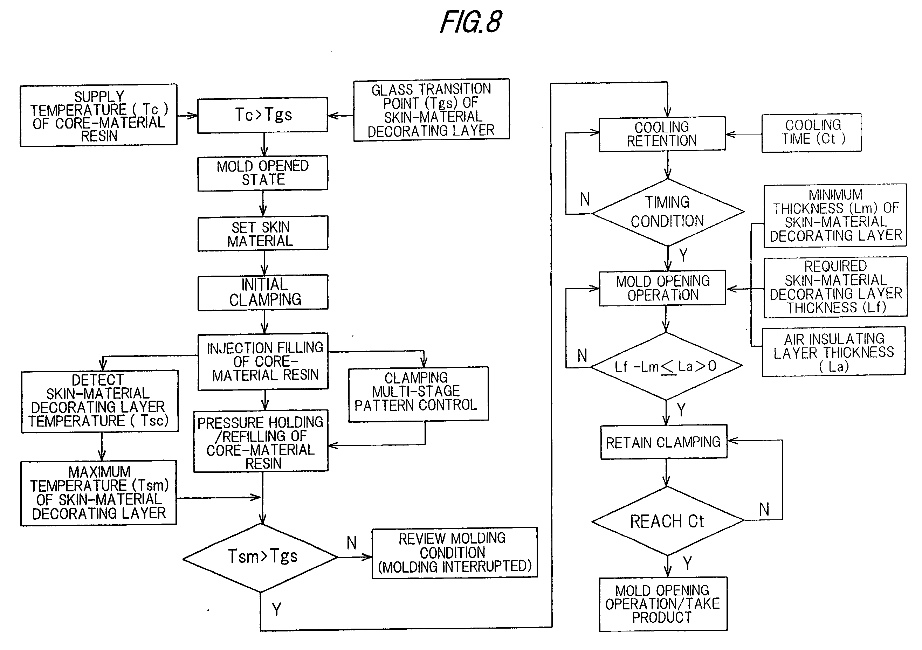

A molding method of a first embodiment shown in Fig. 8 using the resin multilayer molding device of Fig. 1 will be described.

The combination of the skin material S and the core material Q is preset in such a manner that the glass transition point Tgs of the resin decorating layer of the skin material S and the supply temperature Tc of molten resin as the core material Q have a relationship of Tgs<Tc.

The skin material S satisfies the target surface decorating performance, and is constituted by laminating a resin decorating layer which is formed by laminating a resin decorating layer portion constituted of a resin film, a resin woven fabric, a resin nonwoven fabric, and a resin raised woven or nonwoven fabric singly or in a combined manner and an intermediate decorating layer portion constituted of a foaming resin on a back surface of the surface decorating layer portion as needed in accordance with a surface decorating purpose, and a base layer constituted of a resin film, a resin woven fabric or a resin nonwoven fabric or a combination thereof as needed.

For the core-material resin Q, a resin material is selected to satisfy mechanical and chemical properties required for a molded product. For example, when a polypropylene (PP) resin is used as the core-material resin Q, and the skin material S is decorated using a polyethylene terephthalate (PET) resin as the resin decorating layer, the supply temperature Tc of PP resin in usual molding is about 200 to 230°C, while Tg of PET resin is about 70°C. Therefore, Tgs<Tc is sufficiently satisfied.

The skin material S is set in a predetermined position inside the mold cavity 5 using a carrying device section as carrying means (not shown) and using, for example, pin sticking, spring pressing, vacuum suction, or another means. The supplied skin material S has a configuration selected from a sheet configuration cut to a product outline, a rolled configuration to be fed as it is, and a configuration preliminarily molded in accordance with a product configuration. After setting the skin material S, the hydraulic control valve 82 is controlled by the clamping controller 64 based on the initial clamping condition set/entered beforehand in the clamping condition setting section 68 to perform initial clamping. For the initial clamped state, for example, in a case of the skin material S including the resin decorating layer formed by the surface decorating layer portion constituted of a resin film, a resin woven fabric, a resin nonwoven fabric, and a resin raised woven or nonwoven fabric singly or in a combined manner, the molds 3 and 4 are in a completely clamped state in which the molds are loaded with a complete closing/clamping force, or in a low-pressure clamped state in which the molds are loaded with a relatively small clamping force and allowed to open slightly by the pressure of the core-material resin Q when the molds are filled with the injected core-material resin Q.

Moreover, for example, in a case of the skin material S which is constituted by laminating the intermediate decorating layer portion constituted of a foaming resin on the back surface of the surface decorating layer portion, at the time of injection filling of the core-material resin Q, the injected molten resin is prevented from abutting directly on the foaming resin or melting/losing the foaming resin. To this end the molds are placed in an initial clamped state in which the molds are kept open to have a gap to a degree to which the injected molten resin fails to abut directly on the foaming resin.

Additionally, the initial clamped state is selected from the open mold retaining state, the completely clamped state and the low-pressure clamped state in accordance with a mold gate structure (direct gate or side gate).

In the initial clamped state, the molten resin forming the core-material resin Q is injected/filled into a space formed by the skin material S and the mold cavity 5. Subsequently, for the purpose of compensating for a cooling/setting shrinkage of molten resin, pressure holding or refilling of the core-material resin Q is continued as required. Additionally, during the injection filling process or the pressure holding/refilling process of the core-material resin Q, the initial clamped state may be continued. If necessary, the clamping force or the open mold retention quantity may be controlled in multiple stages based on the clamping multi-pattern control condition preset by the clamping condition setting section 68. Alternatively, by injecting/filling the quantity of resin with the cooling/setting shrinkage quantity of the resin added thereto in the injection filling process, pressure holding may be performed on the clamping side by the clamping multi-stage control.

Simultaneously with the injection filling and the pressure holding/refilling of the core-material resin Q, the temperature Tcc of the core-material resin Q and the temperature Tsc of the resin decorating layer of the skin material S are detected by the temperature detector 76. The resin decorating layer of the skin material S is heated by the heat quantity of the core-material resin Q. Here, in the temperature condition in which the maximum temperature Tsm of the resin decorating layer of the skin material S being molded is equal to or lower than the glass transition point Tgs (Tsm≤Tgs), the damaged resin decorating layer being molded cannot be restored using self restoring capability by means of rubber-like elasticity described later. In this case, for example, the supply temperature of the core-material resin Q is further raised, the mold temperature is raised, the material of the resin decorating layer of the skin material S is changed, or other molding conditions need to be reviewed. Therefore, the molding condition of Tsm>Tgs is prerequisite.

Additionally, if the molding condition of Tsm>Tgs is confirmed beforehand, the temperature sensor 8 fixed to the skin material on the side of the resin decorating layer is unnecessary.

The integration of the skin material S and the core-material resin Q and the cooling/setting of the core-material resin Q are performed in a cooling retention process, and the comparison controller 74 detects that the signal of the temperature detector 76 coincides with the change-over timing condition preset in a temperature range which satisfies Tcc≥Tgs by the change-over timing setting section 72. Subsequently, the clamping controller 64 operates the hydraulic control valve 82 to perform a mold opening operation in such a manner that a gap is formed between the resin decorating layer of the skin material S and the mold cavity face opposed to the resin decorating layer. Specifically, in the temperature condition satisfying Tcc≥Tgs, the resin decorating layer of the skin material S is reheated due to the heat quantity of the core-material resin Q in a temperature region in which the rubber-like elasticity of Tgs or more is indicated. Therefore, the resin decorating layer of the skin material S damaged by external forces (heat and pressure influences) during molding can restore itself by the elastic force. Furthermore, through the mold opening operation, the resin decorating layer of the skin material S is given a restoration space. Additionally, the formation of the air insulating layer produces the synergistic effect of time enlargement of the temperature region in which the rubber-like elasticity is indicated (i.e., the enlargement of time allowance for restoration), and the resin decorating layer of the skin material S restores itself.

Therefore, the minimum thickness Lm of the resin decorating layer of the skin material S being molded, the thickness Lf of the resin decorating layer which satisfies the target surface decorating performance after molding and the thickness La of the air insulating layer have a relationship Lf-Lm≤La>0 .

The formed air insulating layer is retained until a cooling time Ct preset by the clamping condition setting section 68 is elapsed. Specifically, when the state in which the resin decorating layer of the skin material S damaged during molding restores itself is retained until the resin decorating layer reaches Tgs or a lower temperature, through the molecular motion of the resin in the resin decorating layer, skin material S is restored to a stable molecular state before molding in which its original decorating performance is provided. Since the subsequent cooling retention stops the molecular motion, the restored state can be maintained. After an elapse of the cooling time Ct, the mold opening operation is performed to take out a molded product using the carrying device section (not shown). By performing the resin multilayer molding method described above, the contradictory molding controls for the molding of the core-material resin Q and the prevention of the decorating skin material from being damaged can be simultaneously achieved in a series of molding processes, and the stable supply of high-quality resin multilayer molded products can be realized without deteriorating the target surface decorating performance.

[Second Embodiment]

In the same manner as in the first embodiment, a molding method of a second embodiment shown in Fig. 8 using the resin multilayer molding device shown in Fig. 1 will be described.

The resin multilayer molding device, the combination of the skin material S and the core-material resin Q, the type of the skin material S, and the method of setting the skin material S are the same as those in the first embodiment. After the skin material S is set in the mold opened state and the initial clamping is performed, the injection filling and the pressure holding/refilling of the core-material resin Q are performed. The initial clamped state, the clamping multi-stage control, and the temperature condition relationship (Tsm>Tgs) during molding are also the same as those in the first embodiment. The integration of the skin material S and the core-material resin Q and the cooling/setting of the core-material resin Q are performed in the cooling retention process, and the comparison controller 74 detects that the signal of the temperature detector 76 coincides with the change-over timing condition preset in a temperature range which satisfies Tcc≥Tgs and Tcc≥Tsm by the change-over timing setting section 72. Subsequently, the clamping controller 64 operates the hydraulic control valve 82 to perform a mold opening operation in such a manner that a gap is formed between the resin decorating layer of the skin material S and the opposed mold cavity face, and the air insulating layer which satisfies the condition of Lf-Lm≤La>0 is formed. Additionally, the definition and effect of the thickness La of the air insulating layer are the same as those in the first embodiment.

The formed air insulating layer is retained until the cooling time Ct preset by the clamping condition setting section 68 is elapsed. Subsequently, by performing the mold opening operation, a molded product is taken.

In the method, for example, in a case where the resin decorating layer of the skin material S is constituted of a crystalline resin, the resin decorating layer is heated by the heat quantity of the core-material resin Q to Tgs or a higher temperature during molding, low-melting micro crystals in the resin composition are fused, and the fusion quantity reaches its maximum at the temperature of Tsm. In the conventional molding method, since the fused micro crystals are recrystallized during cooling and act as a pseudo-crosslinking point to restrain the molecular motion, the damage suffered during molding is left as it is (frozen as a permanent strain). In the molding method of the embodiment, however, the micro crystals of the resin decorating layer are fused again in the formation process of the air insulating layer. Furthermore, in the temperature condition of Tcc≥Tsm, the resin decorating layer is heated again to Tsm or a higher temperature. Therefore, the micro crystals are completely fused again, and the pseudo-crosslinking point which has restrained the molecular motion is completely dissipated (the strain caused by the deformation during molding is released). By cooling down to Tgs or a lower temperature in the state, the molecular motion of the resin brings back the stable molecular state before molding in which the skin material has its original decorating performance. By the cooling in the state, the molecular motion is stopped, and the damage of the resin decorating layer can be completely eliminated.

[Third Embodiment]

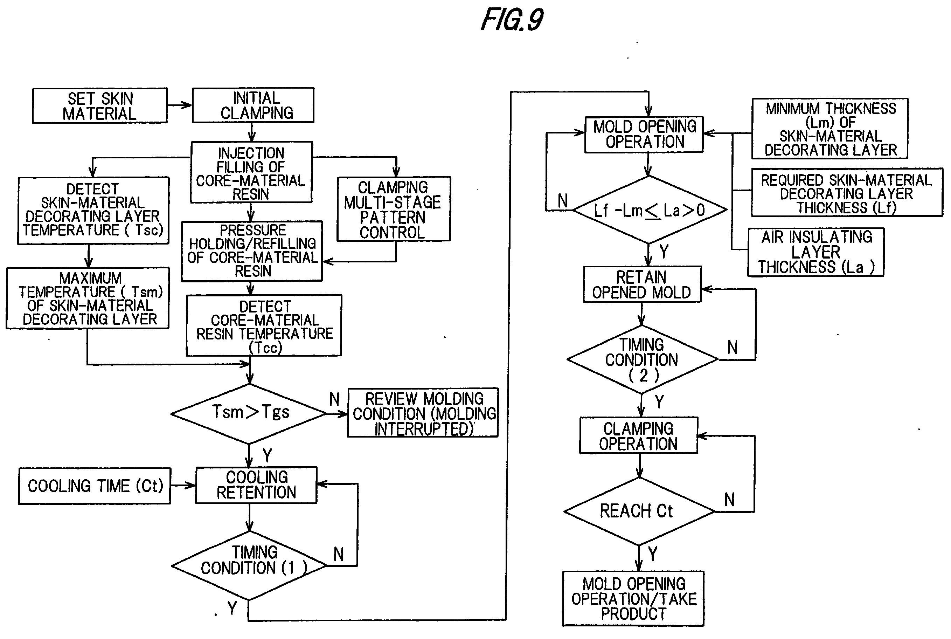

In the same manner as in the first embodiment, a molding method of a third embodiment shown in Fig. 9 using the resin multilayer molding device shown in Fig. 1 will be described.

In the resin multilayer molding method described in the first and second embodiments, after the air insulating layer is formed and retained, at an arbitrary time in a temperature range in which the temperature Tsc of the resin decorating layer of the skin material S satisfies Tsc≥Tgs, the mold is closed to eliminate the air insulating layer therein, and the molding process is continued.

For example, when the molding method of the first embodiment is used, the air insulating layer is formed in change-over timing condition (1) in the same manner as in the first embodiment. In the state, the comparison controller 74 detects that the signal of the temperature detector 76 coincides with change-over timing condition (2) preset in a temperature range which satisfies Tsc≥Tsm by the change-over timing setting section 72. Subsequently, the clamping controller 64 operates the hydraulic control valve 82 to perform a clamping operation in such a manner that a gap is eliminated between the resin decorating layer of the skin material S and the opposed mold cavity face. The clamped state is retained until the cooling time Ct preset by the clamping condition setting section 68 is elapsed. Subsequently, by performing the mold opening operation, a molded product is taken. Additionally, in the clamped state, the clamping force may be controlled to change in multiple stages.

In the method, for example, in the combination of the skin material S icluding the resin decorating layer of a printed or painted resin film and the molds 3 and 4 including a specular-finished mold cavity face, since the air insulating layer is formed, the resin decorating layer of the skin material S being molded has Tgs or a higher temperature. In the temperature condition, the face transfer of the mold cavity face is performed. By cooling the resin decorating layer to Tgs or a lower temperature, a good face transfer state is frozen. As a result, scratches made in the manufacture process of the skin material S, strains generated in the deformation process during molding, and other surface defects can be completely eliminated. A resin multilayer molded product having a highly glossy surface without any tarnish can be obtained.

Moreover, for example, in the combination with the molds 3 and 4 including an embossed mold cavity face, the formation of the air insulating layer and the subsequent clamping process can freeze the exactly face-transferred embossed pattern on the mold cavity face. Therefore, a resin multilayer molded product can be obtained in which the entire surface is uniformly embossed and even a corner portion has no change in the embossed pattern.

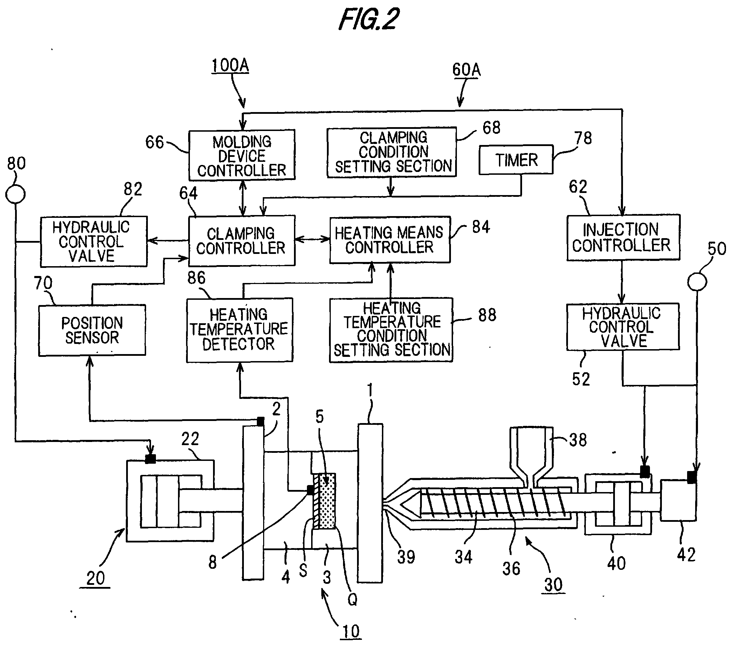

Fig. 2 will next be described.

As shown in Fig. 2, a resin multilayer molding device 100A of the present invention uses a general-purpose injection molding machine, and is constituted of a mold device 10, a clamping device 20, an injection device 30 and a control device 60A. The mold device 10 is constituted of a fixed mold 3 attached to a fixed board 1 and a movable mold 4 attached to a movable board 2, and the movable board 2 and the movable mold 4 can be advanced or retreated by a clamping cylinder 22 of the clamping device 20.

The clamping device 20 is provided with the clamping cylinder 22 for opening or closing the molds 3 and 4 of the mold device 10, and the movable mold 4 can be guided by a tie bar (not shown) to advance or retreat relative to the fixed mold 3.

In the injection device 30, a screw 34 provided with a spirally attached screw flight 36 can rotate and advance or retreat freely in a barrel 32. When the screw 34 is operated by a hydraulic motor 42 to rotate, resin pellets supplied to a hopper 38 are fed to the front of the screw 34. During this operation, the resin pellets are heated by a heater (not shown) attached to an outer peripheral face of the barrel 32 while molten under kneading action of the rotating screw. The molten resin fed to the front of the screw 34 is pushed out toward a nozzle 39 by the screw 34 operated by an injection cylinder 40 to advance, and injected into a mold cavity 5 formed between the molds 3 and 4 via the nozzle 39.

The control device 60A will next be described. As diagrammatically shown in Fig. 2, the control device 60A is constituted of an injection controller 62, a clamping controller 64, a molding device controller 66, a clamping condition setting section 68, a position sensor 70, a timer 78, a heating means controller 84, a heating temperature detector 86 and a heating temperature condition setting section 88.

The injection cylinder 40 and the forward/reverse hydraulic motor 42 are controlled by a hydraulic control valve 52 receiving an operation command from the injection controller 62 to advance and rotate the screw. The molding device controller 66 connected to the injection controller 62 is also connected to the clamping controller 64.

Temperature information of a skin-material decorating layer measured by a temperature sensor 8 is connected to the heating means controller 84 via the heating temperature detector 86. The heating means controller 84 is also connected to the heating temperature condition setting section 88.

Information measured by the position sensor 70 attached to the movable board 2 is connected via the clamping controller 64 to give an operation command to the molding device controller 66, and also connected to the clamping condition setting section 68 and the timer 78. Furthermore, the clamping controller 64 transmits a signal to the clamping cylinder 22 of the clamping device 20 via a hydraulic control valve 82. Additionally, numeral 50 denotes a hydraulic supply on an injection circuit side, and 80 denotes a hydraulic supply on a clamping circuit side.

[Fourth Embodiment]

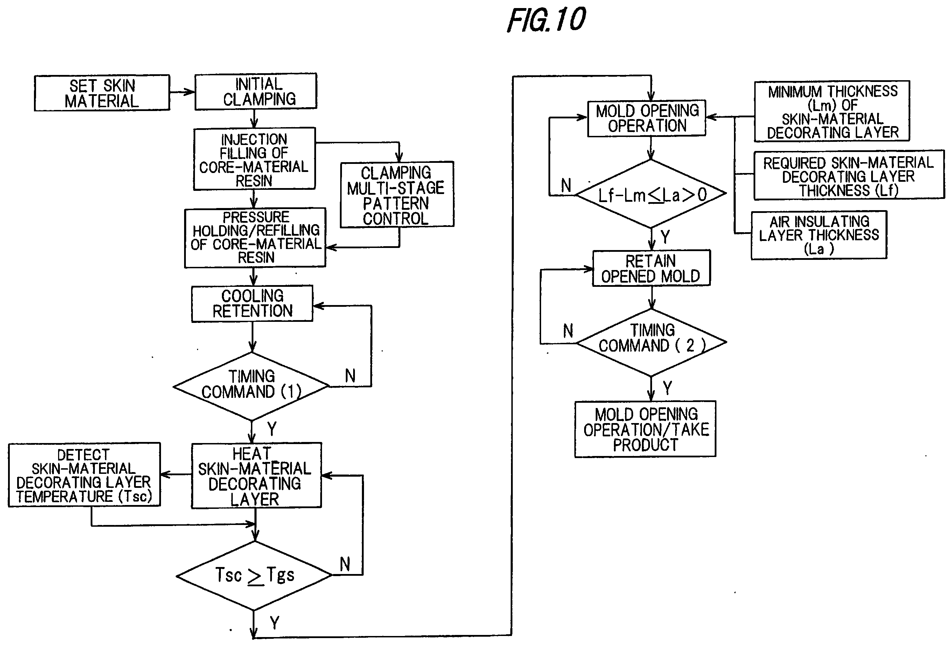

A molding method of a fourth embodiment shown in Fig. 10 using the resin multilayer molding device 100A shown in Fig. 2 will be described.

The combination of the skin material S and the core-material resin Q, the type of the skin material S, the method of setting the skin material S, the initial clamped state and the clamping multi-stage control are the same as those in the first embodiment. After the skin material S is set in the mold opened state, the hydraulic control valve 82 is operated by the clamping controller 64 based on the initial clamping condition preset by the clamping condition setting section 68 to perform initial clamping. Subsequently, the injection filling and the pressure holding/refilling of the core-material resin Q are performed.

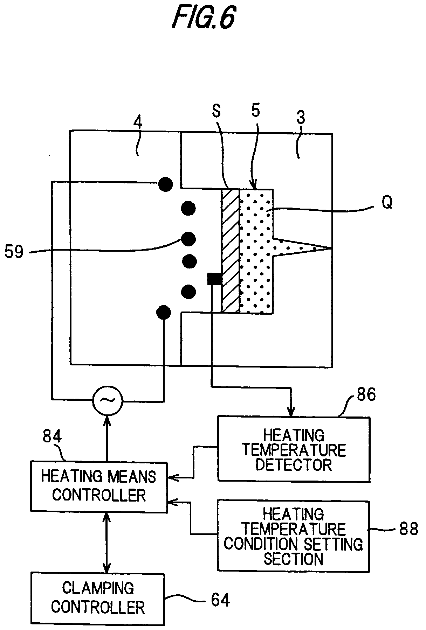

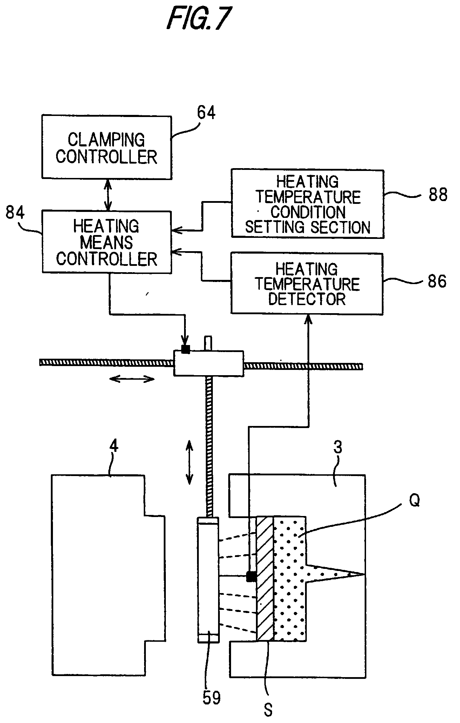

Here, Figs. 6 and 7 will be described. Fig. 6 shows that the heating means of the resin decorating layer of the skin material S is incorporated in the mold. The mold device including the heating means shown in Fig. 6 is constituted of heating means 59, the clamping controller 64, the heating means controller 84, the heating temperature detector 86 and the heating temperature condition setting section 88.

As shown in Fig. 6, the heating by the heating means incorporated in the mold indicates that the mold cavity face is heated by a conductive heating element which is disposed along a mold cavity configuration inside the closed mold to heat the resin decorating layer of the skin material S. Simultaneously with the heating, the temperature of the resin decorating Layer of the skin material S is detected by the temperature sensor 8. At a point when the temperature of the resin decorating layer of the skin material S reaches a preset temperature within the temperature region in which the rubber-like elasticity is indicated, the mold is opened and retained only for a set time.

Besides the heating means by the conductive heating element disposed inside the mold, even when, for example, mold heating by circulating heating medium, thin-film heating by coating the mold cavity face with a conductive heating thin film, mold heating using magnetic, high-frequency or another induction heating, heating by electromagnetic wave or micro wave irradiation, induction heating means by mixing conductive substances in the resin decorating layer and directly heating the resin decorating layer of the skin material S, heating means by jetting hot air or the like to the resin decorating layer of the skin material S, or another heating means is used, the same effect can be obtained.

Furthermore, Fig. 7 shows a case where the heating means of the resin decorating layer of the skin material S is incorporated outside the mold.

As shown in Fig. 7, by moving the heating means 59 between the fixed mold 3 and the movable mold 4, the resin decorating layer of the skin material S is heated. Simultaneously with the heating, the temperature of the resin decorating layer of the skin material S is detected by a temperature sensor incorporated in the heating means 59. After the temperature of the resin decorating layer of the skin material S reaches a preset temperature within the temperature region in which the rubber-like elasticity is indicated, the temperature is retained only for a predetermined time. Additionally, examples of the heating means 59 include a heater, spraying of hot air, irradiation by a halogen lamp, and other direct or indirect heating methods.

Upon receipt of timing command (1) preset by the heating means controller 84 in the cooling retention process in which the integration of the skin material S and the core-material resin Q and the molding of the core-material resin Q can be completely finished, the resin decorating layer of the skin material S is heated using the heating means 59 shown in Figs. 6 and 7. After the heating means controller 84 detects that the signal of the heating temperature detector 86 coincides with the heating temperature condition preset in a temperature range which satisfies Tsc≥Tgs by the heating temperature condition setting section 88, the clamping controller 64 operates the hydraulic control valve 82 to perform mold opening operation in such a manner that a gap is formed between the resin decorating layer of the skin material S and the opposed mold cavity face. The air insulating layer which satisfies the condition of Lf-Lm≤La>0 is formed. The definition and effect of the air insulating layer thickness La are the same as those in the first embodiment.

Subsequently, upon receipt of timing command (2) preset by the clamping condition setting section 68, mold opening operation is performed to take a molded product.

In the method, for example, even in the molding conditions which cannot set the temperature condition in which the temperature Tcc of the core-material resin Q being molded and the maximum temperature Tsm of the resin decorating layer of the skin material S have a relationship of Tcc≥Tsm and Tcc≥Tgs, a high-quality resin multilayer molded product can be obtained without deteriorating the target surface decorating performance. Furthermore, the process of integration of the skin material S and the core-material resin Q and molding of the core-material resin Q can be performed separately from the self restoration process (damage prevention process) of the resin decorating layer of the skin material S. Therefore, a high dimensional precision without any deformation or warpage is compatible with a high surface decorating performance. Additionally, the air insulating layer is formed after heating in the embodiment, but the air insulating layer may be formed simultaneously with heating. Alternatively, after the air insulating layer is formed, heating may be performed. Moreover, heating may be continued even after the formation of the air insulating layer, or interrupted or intermittently performed.

[Fifth Embodiment]

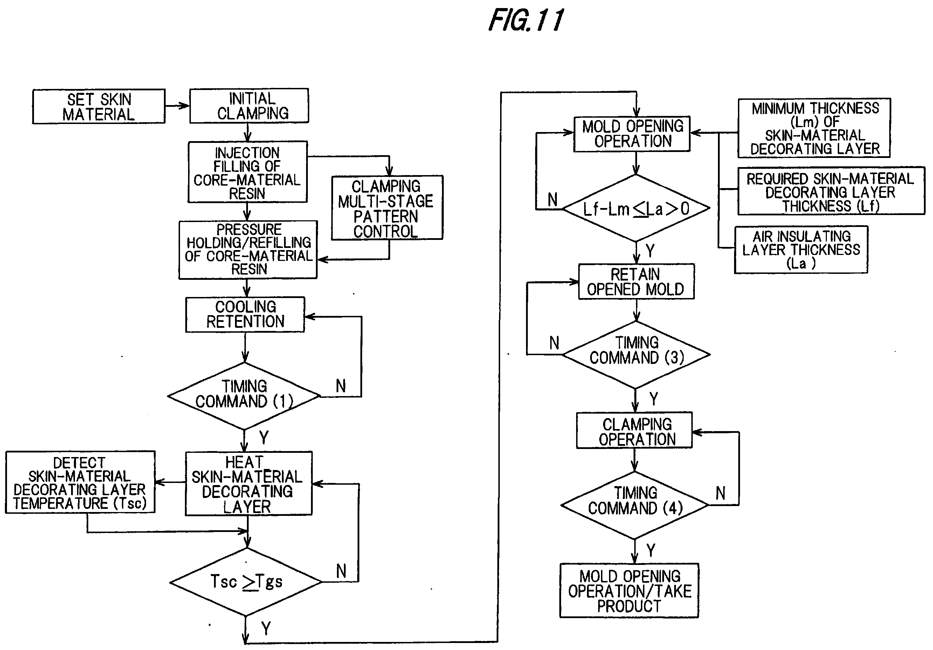

Successively after the process of forming the air insulating layer of the fourth embodiment, as shown in Fig. 11, upon receipt of timing command (3) preset within a temperature range of Tsc≥Tgs by the clamping condition setting section 68, the mold is closed to eliminate the air insulating layer and obtain a clamped state. Subsequently, upon receipt of timing command (4) preset by the clamping condition setting section 68, mold opening operation is performed to take a molded product. Additionally, the clamping force may be controlled to change in multiple stages in the clamped state. In the method, the effect described in the third embodiment is more remarkably realized. Specifically, a resin multilayer molded product having a high surface gloss without any tarnish or a resin multilayer molded product uniformly embossed over the entire surface can be obtained.

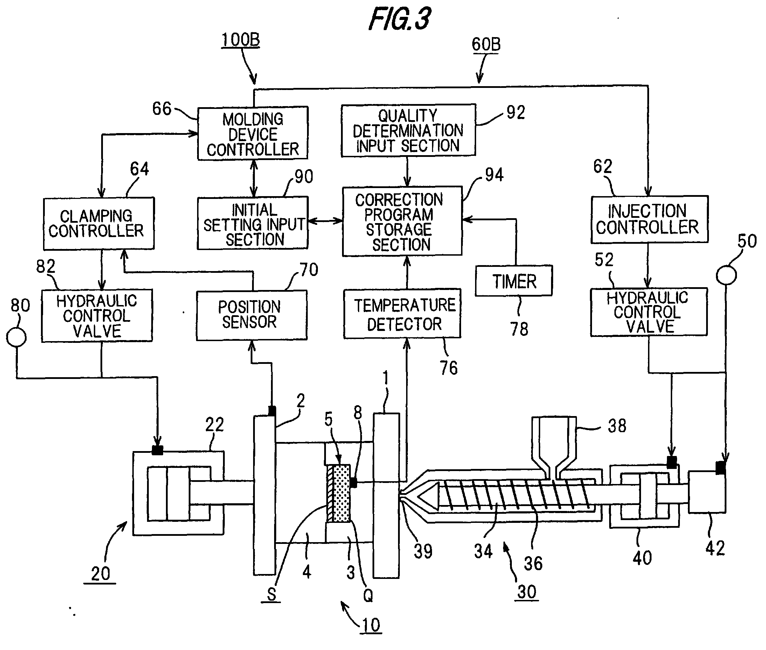

Fig. 3 will next be described.

As shown in Fig. 3, a resin multilayer molding device 100B of the present invention uses a general-purpose injection molding machine, and is constituted of a mold device 10, a clamping device 20, an injection device 30 and a control device 60B. The mold device 10 is constituted of a fixed mold 3 attached to a fixed board 1 and a movable mold 4 attached to a movable board 2, and the movable board 2 and the movable mold 4 can be advanced or retreated by a clamping cylinder 22 of the clamping device 20.

The clamping device 20 is provided with the clamping cylinder 22 for opening or closing the molds 3 and 4 of the mold device 10, and the movable mold 4 can be guided by a tie bar (not shown) to advance or retreat relative to the fixed mold 3.

In the injection device 30, a screw 34 provided with a spirally attached screw flight 36 can rotate and advance or retreat freely in a barrel 32. When the screw 34 is operated by a hydraulic motor 42 to rotate, resin pellets supplied to a hopper 38 are fed to the front of the screw 34. During this operation, the resin pellets are heated by a heater (not shown) attached to an outer peripheral face of the barrel 32 while molten under kneading action of the rotating screw. The molten resin fed to the front of the screw 34 is pushed out toward a nozzle 39 by the screw 34 operated by an injection cylinder 40 to advance, and injected into a mold cavity 5 formed between the molds 3 and 4 via the nozzle 39.

The control device 60B will next be described. As diagrammatically shown in Fig. 3, the control device 60B is constituted of an injection controller 62, a clamping controller 64, a molding device controller 66, a position sensor 70, a timer 78, an initial setting input section 90, a quality determination input section 92 and a correction program storage section 94.

The injection cylinder 40 and the forward/reverse hydraulic motor 42 are controlled by a hydraulic control valve 52 having received an operation command from the injection controller 62 to advance and rotate the screw. The molding device controller 66 connected to the injection controller 62 is also connected to the clamping controller 64.

Temperature information of the core-material resin Q measured by a temperature sensor 8 is connected to the correction program storage section 94 via the temperature detector 76. The initial setting input section 90 is also connected to the correction program storage section 94, and the correction program storage section 94 is connected to the quality determination input section 92 and the timer 78.

Information measured by the position sensor 70 attached to the movable board 2 is connected via the clamping controller 64 to give an operation command to the molding device controller 66, and also connected to the clamping condition setting section 68 and the timer 78. Furthermore, the clamping controller 64 transmits a signal to the clamping cylinder 22 of the clamping device 20 via a hydraulic control valve 82. Additionally, numeral 50 denotes a hydraulic supply on an injection circuit side, and 80 denotes a hydraulic supply on a clamping circuit side.

[Sixth Embodiment]

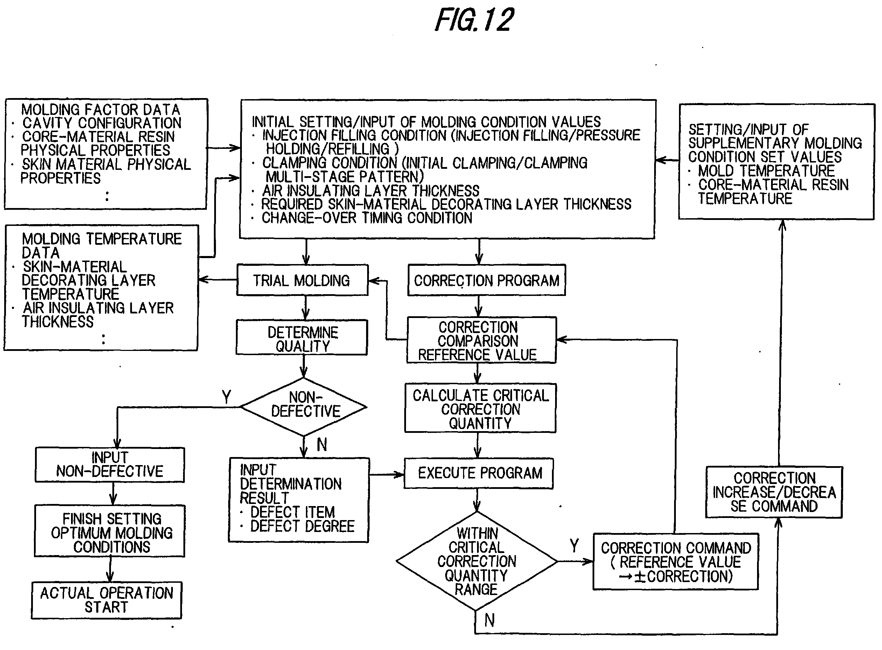

A molding method of a sixth embodiment shown in Fig. 12 will be described using the resin multilayer molding device 100B shown in Fig. 3. To perform the resin multilayer molding of the first to third embodiments, molding factor data constituted of a mold cavity configuration, core-material resin physical properties, a skin-material constitution, resin decorating layer physical properties, and the like are entered beforehand. Supplementary molding condition set values constituted of a mold temperature, a core-material resin temperature, and the like are also set and entered. Additionally, molding conditions such as the injection filling condition (injection filling, pressure holding/refilling), the clamping condition (initial clamped state, clamping multi-stage control pattern during molding), the air insulating layer thickness, the thickness of the resin decorating layer of the skin material S after molding which satisfies the target surface decorating performance, and the change-over timing condition are initially set and entered into the initial setting input section 90. Moreover, in the initial setting of the molding conditions, approximate values acknowledged by an operator in a common-sense range in operation may be set. The values are automatically corrected to optimum molding condition values through the subsequent correction operation by a correction program described later. Therefore, special knowledge, experience or skill is unnecessary, and anyone can perform the setting.

Furthermore, for defect items and degrees obtained from results of visual quality determination by the operator, a correction program is prepared beforehand based on the preset correction direction and quantity, and entered into the correction program storage section 94. The correction program is provided with a function of selecting an item needed to be corrected from the initially set molding condition values; a function of correcting the set value of the selected set item; and a function of emitting an operation command to change the supplementary molding conditions constituted of the mold temperature, the core-material resin temperature, and the like when the corrected set value reaches the preset critical correction value.

Trial punching molding is performed using either of the molding methods of the first to third embodiments. During the molding, the temperature of the core-material resin Q or the temperature of the resin decorating layer of the skin material S (in this case, the temperature sensor 8 is also disposed on the side of the resin decorating layer of the skin material S) is detected by the temperature detector 76, and entered into the correction program storage section 94. Additionally, the operator visually determines the quality of a resulting molded prototype after the molding, and inputs a quality determination result (a non-defective or a defective, defect item and degree in a case of the defective). Based on the entered quality determination result, in the case of the defective, the initially set molding condition set value is corrected according to the correction program, and the trial punching molding is performed again using the corrected molding condition set value (corrected comparison reference value). The operation is repeated afterwards until the non-defective is obtained as the result of the quality determination by the operator. When the quality determination gives a result of the non-defective, the molding condition set value corrected at the time becomes an optimum molding condition set value. The setting operation is thus completed and shifts to an actual operation.

Additionally, for the defect items of the quality determination results, for example, items indicating core-material resin molding defects such as generation of burr, short shot, deformation, warpage, and the like, and items indicating deterioration of the surface decorating performance such as damage on the skin material can be entered.

The correction program absorbs the thinking of the molding principle according to the present invention that the damaged resin decorating layer of the skin material S is restored by forming the air insulating layer or that the transfer properties of the cavity face can be enhanced by the subsequent clamping. Consequently, the optimum molding conditions for the contradictory and remarkably difficult molding controls for the molding of the core-material resin Q and the prevention of the skin material S from being damaged can be easily set.

The correction item of the initial molding condition set value is selected and the correction direction (increase or decrease) and quantity are calculated based on the correction program. In a case where the resin multilayer molding method of the second embodiment is used, for example, for "the damage of the skin material" in the defect items, by correcting the temperature setting in the change-over timing condition for forming the air insulating layer and raising the temperature of the core-material resin Q or the resin decorating layer of the skin material S, the damage restoring capability is enhanced. On the other hand, since the cooling/setting state (moldability) of the core-material resin is deteriorated, correction is made in a direction in which the pressure holding/refilling force is enhanced to compensate for the deterioration of the moldability. Furthermore, by making correction in a direction in which the thickness of the air insulating layer is increased, the entire molding balance is finely adjusted, and the restoration space of the resin decorating layer of the skin material S is enlarged. Additionally, for example, for "the generation of burr" related with the moldability of the core-material resin Q, the injection filling quantity of the core-material resin is corrected in a decrease direction, and the injection filling condition (pressure, speed or the like) and the clamping force in the initial clamped state are corrected in an increase direction, to make fine adjustment.

Furthermore, the correction program is provided with a function of calculating the critical correction quantity on the basis of an initial set value which is set simultaneously with the initial setting/input of molding condition values, and of avoiding a conditioning error of an infinite loop by repetition of correction. Specifically, in a case where the correction is repeated until the correction quantity reaches the critical correction quantity, for example, since the temperature of the mold or the core-material resin Q as the supplementary molding condition set value is set extremely low, the reduction of the temperature region in which the rubber-like elasticity is indicated (excess reduction of the optimum molding condition range) is supposed to be caused by insufficient heating of the resin decorating layer of the skin material S during molding. It is judged that the setting of the supplementary molding condition set value rather than the molding condition set value is incorrect, and a correction increase/decrease command is issued. In this case, the supplementary molding condition set value is corrected, so that the condition error by the infinite loop is avoided.

In the method, even an insufficiently skilled operator can easily set the optimum molding conditions, and no dispersion of molded product quality by a difference in operator's skill is generated. Furthermore, the automating of optimum molding condition setting and the reduction of conditioning time enhance productivity or produce other effects. As a result, more stable supply of remarkably high-quality resin multilayer molded products can be realized without deteriorating the target surface decorating performance, and cost saving can be realized by the enhancement of productivity.

[Seventh Embodiment]

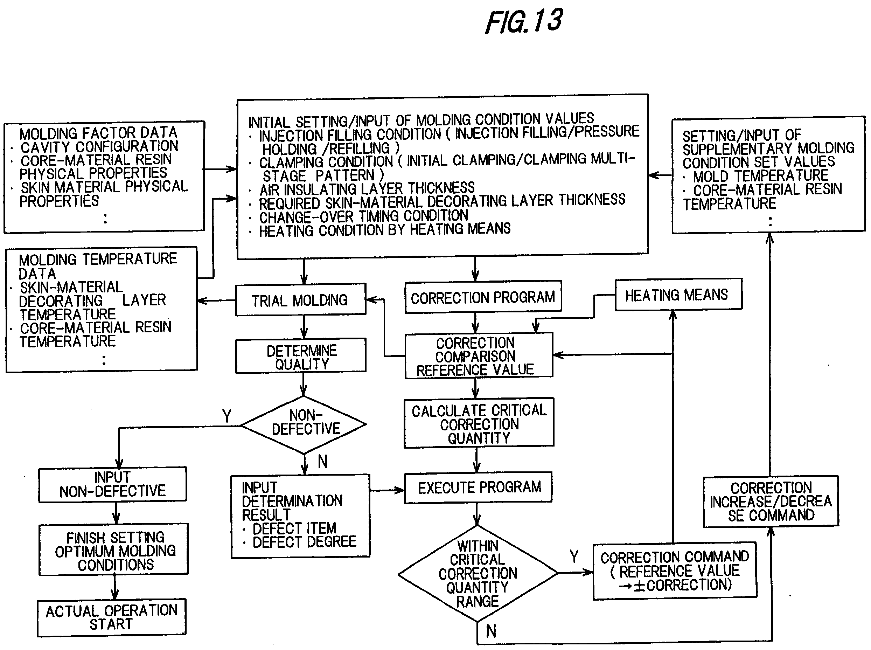

An seventh embodiment will be described with reference to Fig. 13. When the resin multilayer molding of the fourth or fifth embodiment is performed, molding data and supplementary molding condition set values are preset and entered, and molding condition set values are initially set and entered. The resin multilayer molding device, the contents of set values, the setting method and the content of the correction program are the same as those of the sixth embodiment, except in that heating means and condition are added as set items to the initial setting condition values.

Trial punching molding is performed using the molding method of the fourth or fifth embodiment. The subsequent quality determination and result input by an operator, the correction rule, and the like are the same as those of the sixth embodiment, except in that the correction program includes correction conditions for the heating means and condition.

The correction item is selected from the initial molding condition set values and the correction direction (increase or decrease) and quantity are calculated based on the correction program. In a case where the resin multilayer molding method of the fourth embodiment is used, for example, for "the damage of the skin material" in the defect items, by correcting the temperature setting in the condition of heating by the heating means and by raising the heating temperature of the resin decorating layer of the skin material S, the damage restoring capability is improved. Furthermore, by making correction in a direction in which the thickness of the air insulating layer is increased, the restoration space of the resin decorating layer of the skin material S is enlarged, and the entire molding balance is finely adjusted. Moreover, for example, for "deformation/warpage" related with the moldability of the core-material resin Q, the change-over timing condition for forming the air insulating layer is corrected in a delaying direction to enhance the moldability of the core-material resin Q (the entire molded product). Additionally, the injection filling condition (pressure, speed, or the like) and the clamping force in the initial clamped state are corrected in an increasing direction to make fine adjustment.

In the method, in the same manner as in the sixth embodiment, the optimum molding conditions can be easily set irrespective of the operator's skill, and no dispersion of molded product quality is generated. Furthermore, the automating of optimum molding condition setting and the reduction of conditioning time enhance productivity or produce other effects. In the embodiment, after the integration of the skin material S and the core-material resin Q and the molding of the core-material resin Q are completed, the complete self restoration of the resin decorating layer of the skin material S can be attained by the heating process and the formation of the air insulating layer. Therefore, the optimum molding conditions can be set simpler and quickly, and the selection range of the combination of the skin material S and the core-material resin Q can be enlarged.

[Eighth Embodiment]

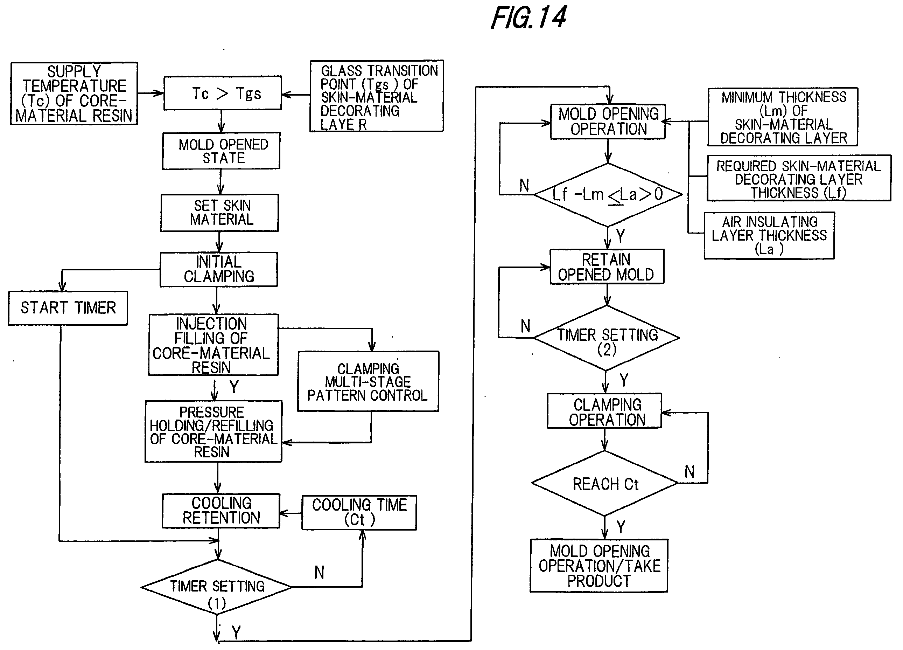

A eighth embodiment will be described with reference to Fig. 14. When the resin multilayer molding of the first to seventh embodiments is performed, the temperature hysteresis of the core-material resin Q and the resin decorating layer of the skin material S during molding is obtained beforehand, for example, by measuring molding temperature changes at the time of trial punching molding or by calculating using CAE (Computer Aided Engineering) analysis method or the like. Based on the hysteresis, the change-over timing condition for forming or eliminating the air insulating layer is set with a time-out signal from a timer which is started at an arbitrary time during molding.

The molding method of the fourth embodiment will be described illustrating a case where the resin multilayer molding method of the fourth embodiment is used. After setting the skin material S in the mold opened state and performing initial clamping, the injection filling and pressure holding/refilling of the core-material resin Q are performed. In the embodiment, for example, the timer 78 which starts at the time of completion of the initial clamping is used as a reference. The resin multilayer molding device, the combination of the skin material S and the core-material resin Q, the type of the skin material S, the method of setting the skin material S, the initial clamped state, and the clamping multi-stage control are the same as those in the third embodiment, but on the premise that the establishment of the temperature condition relationship (Tsm>Tgs) during molding is confirmed beforehand.

When preset timer setting (1) is reached in the cooling retention process, mold opening operation is performed to form a gap between the resin decorating layer of the skin material S and the opposed mold cavity face, and the air insulating layer which satisfies the condition of Lf-Lm≤La>0 is formed. Here, the timer setting (1) indicates a point when the integration of the skin material S and the core-material resin Q and the cooling/setting of the core-material resin Q are substantially completed and the temperature condition which satisfies Tcc≥Tgs or Tsc≥Tgs is attained. Additionally, the definition and effect of the thickness La of the air insulating layer are the same as those in the third embodiment. When preset timer setting (2) is reached while the air insulating layer is formed, the mold is closed to eliminate the air insulating layer and obtain a clamped state. The claimed state is retained until the preset cooling time Ct is elapsed. Subsequently, mold opening operation is performed to take a molded product. Here, the timer setting (2) indicates a point when the resin decorating layer of the skin material S reaches its maximum temperature within a temperature range of Tsc≥Tgs.

In the method, the timing for forming the air insulating layer can be controlled with a simple control device only of the timer time-out signal and, as a result, contradictory complicated molding controls for the molding of the core-material resin Q and the damage prevention of the skin material S can be realized. Furthermore, by controlling the timing for closing the mold to eliminate the air insulating layer, molding can be controlled to provide high mold cavity face transferability. Consequently, a resin multilayer molding can be realized in which the device is simplified, operability and maintainability are enhanced and manufacture cost can be reduced.

[Ninth Embodiment]

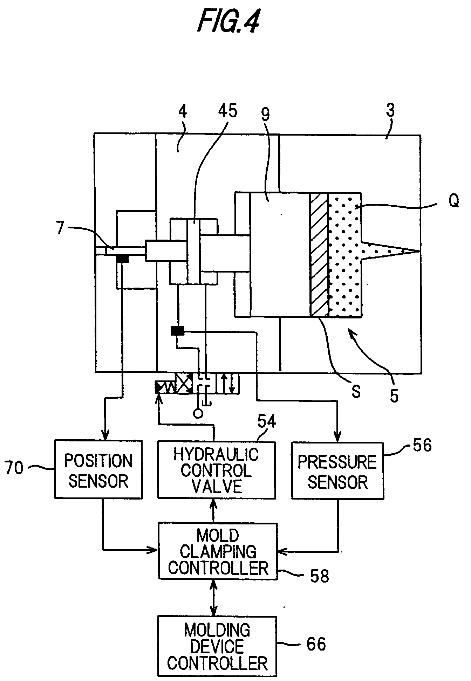

To perform the resin multilayer molding of the first to seventh embodiments, the air insulating layer may be formed, the initial clamped state may be obtained and the multi-stage clamping control during molding may be performed using, for example, a mold device shown in Fig. 4.

Fig. 4 shows a case where air insulating layer forming means is disposed in a mold. For example, a guide rod 7 is fixed on the same axis as that of a hydraulic cylinder 45 on the rear face of the hydraulic cylinder 45 connected to a slidable cavity core 9 in the movable mold 4.

A position sensor 70 for detecting stroke of the hydraulic cylinder 45 and a pressure sensor 56 for detecting supply hydraulic pressure (clamping force) are also provided. The clamping force during molding and the air insulating layer are formed by controlling the pressure and position of the hydraulic cylinder 45.

The hydraulic cylinder 45 is advanced or retreated by switching a hydraulic control valve 54. Additionally, a mold clamping controller 58 is connected to the position sensor 70, the pressure sensor 56 and a molding device controller 66.

In a case where multilayer molding is performed using the mold device shown in Fig. 4, the change-over timing conditions for forming and eliminating the air insulating layer, the initial clamping condition, the multi-stage clamping control pattern condition, and the like are set by the mold clamping controller 58 via the molding device controller 66.

In the method, for example, even if the molding device is not provided with the means for forming the air insulating layer, obtaining the initial clamped state and controlling clamping in multiple stages during molding, contradictory molding controls for the formation of the core-material resin Q and the damage prevention of the skin material S can be achieved simultaneously in a series of molding processes. Stable supply of high-quality resin multilayer molded products can be realized without deteriorating the target surface decorating performance.

Additionally, the cavity core 9 with the mold cavity face formed thereon is advanced or retreated by the hydraulic cylinder or the like incorporated inside the mold, but the movable mold 4 may be entirely operated, for example, by attaching a pressure block or the like including an advancing/retreating unit to the outside of the mold.

[Tenth Embodiment]

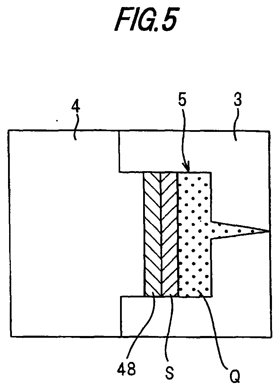

When the resin multilayer molding of the first to seventh embodiments is performed, a mold structure may be used in which, as shown in Fig. 5, an insulating cavity layer 48 is formed on the mold cavity face opposed to the resin decorating layer of the skin material S.

Fig. 5 shows an example in which the mold cavity face opposed to the resin decorating layer of the skin material S has an insulating cavity structure, and in the insulating cavity structure, the insulating layer is formed of, for example, a metal having a low thermal conductivity, a ceramic, a resin, or the like.

In the method, the resin decorating layer of the skin material S during molding is highly effectively retained in a stable temperature condition of Tgs or more for a long time, and self restoring capability can further be enhanced. Especially, in the molding method in which the mold is closed again after the air insulating layer is formed, since the temperature of the resin decorating layer of the skin material S can be prevented from lowering by the insulating cavity face, this remarkable effect contributes to the enhancement of molded product quality.

Moreover, even when the temperature of the mold cavity face opposed to the resin decorating layer of the skin material S is retained by inserting a heat pipe into the mold to heat the mold, circulating heating medium through a heating medium circulation hole formed inside the mold to heat the mold, induction-heating the mold with induction heating means disposed outside, or by another means, the same effect can be obtained.

[Other Modifications]

Besides the resin multilayer molding methods shown in the first to tenth embodiments described above, following molding methods may be performed together with the embodiment or singly. For example, by using a plurality of injection devices which can inject/fill a plurality of types of core-material resin Q simultaneously, the skin material S having decorating performance can be simultaneously integrally molded on the surface of the core-material resin Q laminated in multiple layers. In this method, a resin multilayer molded product provided with multi-function characteristics which cannot be fulfilled by the single-layer core-material resin Q can be obtained.

Moreover, in a case where the multilayered core-material resin Q including a foaming resin is used, by restoring the damaged resin decorating layer of the skin material S and simultaneously controlling the thickness of the air insulating layer in a process of forming the air insulating layer, the foaming magnification of the foaming resin can be controlled, and the foaming molding of the foaming resin can be performed in a series of molding processes.

In the aforementioned first to tenth embodiments, the skin material S is integrally molded on one surface of the core-material resin Q, but may be integrally molded on the opposite surfaces or the entire surface of the core-material resin Q. Additionally, besides the resin, for example, a metal film or a painting agent may be applied to the surface or intermediate decorating layer portion of the resin decorating layer of the skin material S as needed.

The resin decorating layer of the skin material S is heated/processed by the heating means 59 in a series of molding processes in the molding method of the fourth embodiment but, for example, even by using a hot-air heating oven or another heating means to heat/process the molded product after molding and separately from the molding processes, the self restoration effect of the resin decorating layer of the skin material S can be obtained in the same manner. This case, however, has demerits that a heating device separate from the molding device is necessary and that time is wasted because the completely cooled molded product needs to be heated from a normal temperature to a predetermined temperature, but has a merit that a large number of molded products can be stocked to be heated/processed in a batch.

Additionally, after the heating processing is performed in a separate process, the molded product may be press-molded, for example, with a separate press device or the like. In this case, the effect described in the molding method of the fifth embodiment can be expected.

In the molding methods of the above first to tenth embodiments, for example, a rust proof lubricant may be applied beforehand to the mold cavity face opposed to the resin decorating layer of the skin material S. In this case, the applied rust proof lubricant enters recesses in a microscopic irregular surface of the mold cavity face, and the mold cavity face can be entirely smoothed as if there is no irregularity. Therefore, frictional scratches are effectively prevented from being made by deforming/sliding of the skin material being molded. Especially, in the molding methods of the third and fifth embodiments, by applying the rust proof lubricant in the clamping process after the formation of the air insulating layer to effectively smooth the cavity face, the molded product quality can further be enhanced.

Additionally, the rust proof lubricant is oil such as a mineral oil, a vegetable oil, and the like; glycerin or alcohol; or water or aqueous solution, and is a liquid or a mixed liquid which can exist in the recesses of the microscopic irregular surface of the mold cavity face as liquid without being evaporated by the temperature during molding.

Industrial Applicability

By using the resin multilayer molding method and device according to the present invention, for any type of skin material in which the resin decorating layer formed by laminating in accordance with the surface decorating purpose the surface decorating layer portion constituted of a resin film, a resin woven fabric, a resin nonwoven fabric, a resin raised woven or nonwoven fabric singly or in a combined manner and the intermediate decorating layer portion constituted of a foaming resin on the back surface of the surface decorating layer portion as needed, and the base layer constituted of a resin film, a resin woven fabric, a resin nonwoven fabric or a combination thereof as needed are laminated, the contradictory molding controls for the molding of the core-material resin and the damage prevention of the decorating skin material can be simultaneously achieved in a series of molding processes. Additionally, remarkably high-quality multilayer molded products can be supplied stably at low cost without deteriorating the target surface decorating performance.

**Claims**

1. A resin multilayer molding method in which a skin material having a resin decorating layer on a surface and a core-material resin are integrally molded in a mold, comprising the steps of:

presetting a relationship of a glass transition point (Tgs) of the resin decorating layer of the skin material and a supply temperature (Tc) of a molten resin forming a core material to satisfy Tgs<Tc, and performing molding on a condition that a maximum temperature (Tsm) of the resin decorating layer of the skin material being molded satisfies Tsm>Tgs;
wherein within a temperature range in which a temperature (Tcc) of the core-material resin being molded satisfies Tcc≥Tgs at the preset arbitrary time, the gap is made between the resin decorating layer of the skin material and the mold cavity face opposed to the resin decorating layer to form and retain the air insulating layer.

2. The resin multilayer molding method according to claim 1 wherein within a temperature range in which the temperature (Tcc) of the core-material resin being molded satisfies Tcc≥Tsm and Tcc≥Tgs at the preset arbitrary time, the gap is made between the resin decorating layer of the skin material and the mold cavity face opposed to the resin decorating layer to form and retain the air insulating layer.

3. The resin multilayer molding method according to claim 1 or 2 wherein after the air insulating layer is formed, within the temperature range in which the temperature (Tsc) of the resin decorating layer of the skin material satisfies Tsc≥Tgs at a preset arbitrary time, the mold is closed to eliminate the air insulating layer and retained.

4. A resin multilayer molding method in which a skin material having a resin decorating layer on a surface and a core-material resin are integrally molded in a mold, comprising the steps of:

at a preset arbitrary time after a molten resin forming a core material is supplied, using heating means incorporated inside the mold or attached outside the mold, and heating the resin decorating layer of the skin material to a glass transition point (Tgs) or a higher temperature and subsequently making a gap between the resin decorating layer of the skin material and a mold cavity face opposed to the resin decorating layer to form an air insulating layer, or forming the air insulating layer and subsequently heating the resin decorating layer of the skin material to Tgs or a higher temperature, or heating and simultaneously forming the air insulating layer, to retain the air insulating layer.

5. The resin multilayer molding method according to claim 4 wherein after the air insulating layer is formed, in a temperature range in which a temperature (Tsc) of the resin decorating layer of the skin material satisfies Tsc≥Tgs at a preset arbitrary time, the mold is closed to eliminate the air insulating layer and retained.

6. The resin multilayer molding method according to any one of claims 1 - 3 wherein after an injection filling condition for injection filling the molten resin forming the core material into a mold cavity space and refilling a cooling/setting shrinkage quantity, a clamping condition during the injection filling, a thickness of the air insulating layer, a change-over timing condition for forming the air insulating layer, and a change-over timing condition for eliminating the air insulating layer are initially set as molding conditions,

trial molding and visual quality determination by an operator are performed, in a case where the molding conditions need to be changed based on a result of the visual quality determination, a prepared correction program is used to correct the molding conditions, and optimum molding conditions for preventing the resin decorating layer of the skin material being molded from being damaged are set.

7. The resin multilayer molding method according to claim 4 or 5 wherein after an injection filling condition for injection filling the molten resin forming the core material into a mold cavity space and refilling a cooling/setting shrinkage quantity, a clamping condition during the injection filling, a thickness of the air insulating layer, a change-over timing condition for forming the air insulating layer, a change-over timing condition for eliminating the air insulating layer, and a heating condition for heating the resin decorating layer of the skin material using the heating means are initially set as molding conditions,

trial molding and visual quality determination by an operator are performed, in a case where the molding conditions need to be changed based on a result of the visual quality determination, a prepared correction program is used to correct the molding conditions, and optimum molding conditions for preventing the resin decorating layer of the skin material being molded from being damaged are set.

8. The resin multilayer molding method according to any one of claims 1 — 7 wherein a minimum thickness (Lm) of the resin decorating layer of the skin material being molded, a thickness (Lf) of the resin decorating layer after molding which satisfies a required surface decorating performance as a multilayer molded product, and a thickness (La) of the air insulating layer have a relationship of $Lf-Lm \leq La > 0$ .

9. The resin multilayer molding method according to any one of claims 1 —7 wherein the skin material is a lamination of a resin decorating layer which is formed by laminating a surface decorating layer portion constituted of a resin film, a resin woven fabric, a resin nonwoven fabric, and a resin raised woven or nonwoven fabric singly or in a combined manner and an intermediate decorating layer portion constituted of a foaming resin on a back surface of the surface decorating layer portion as needed in accordance with a surface decorating purpose, and a base layer constituted of a resin film, a resin woven fabric or a resin nonwoven fabric or a combination thereof as needed.

10. The resin multilayer molding method according to any one of claims 1 — 7 wherein the temperature of the core-material resin and the temperature of the resin decorating layer of the skin material during molding are detected, and

change-over timing control for forming the air insulating layer and change-over timing control for eliminating the air insulating layer are performed in response to a detected temperature signal.

11. The resin multilayer molding method according to any one of claims 1 - 7 wherein change-over timing control for forming the air insulating layer and change-over timing control for eliminating the air insulating layer are performed in response to a time-out signal of a timer which starts at an arbitrary time during molding.

12. The resin multilayer molding method according to claim 6 or 7 wherein a function of selecting an item needed to be corrected from the initially set molding condition values based on preset correction direction and correction quantity corresponding to quality defect items and quality defect degrees obtained by the result of the visual quality determination of the operator, a function of correcting a set value of the selected set item, and

a function of issuing an operation command for changing supplementary molding conditions constituted of a mold temperature, a core-material resin temperature, and the like when the corrected set value reaches a preset critical correction value are given to the correction program.

13. The resin multilayer molding method according to any one of claims 1 — 7 which uses the mold in which an insulating cavity layer is formed on the mold cavity face opposed to the resin decorating layer of the skin material.

14. A resin multilayer molding device in which a skin material having a resin decorating layer on a surface and a core-material resin are integrally molded in a mold, comprising:

carrying means for carrying and setting the skin material to a predetermined position of a mold cavity and carrying a molded product to a predetermined position after molding, and supply means for supplying a molten resin forming a core material into a mold cavity space; and

a clamping condition setting section for setting/entering a clamping condition and a thickness of an air insulating layer during supply and after supply of the molten resin, a change-over timing setting section for a change-over timing condition for forming the air insulating layer and a change-over timing condition for eliminating the air insulating layer, a temperature detecting section for detecting a temperature of the core-material resin and a temperature of the resin decorating layer of the skin material during molding, a comparison control section for comparing/determining a detection signal of the temperature detecting section and a set value of the change-over timing setting section, and a clamping control section for controlling clamping means based on a signal of the comparison control section and a set value of the clamping condition setting section.

15. A resin multilayer molding device in which a skin material having a resin decorating layer on a surface and a core-material resin are integrally molded in a mold, comprising:

carrying means for carrying/setting the skin material to a predetermined position of a mold cavity and carrying a molded product to a predetermined position after molding, and supply means for supplying a molten resin forming a core material into a mold cavity space; and

a clamping condition setting section for setting/entering a clamping condition and a thickness of an air insulating layer during supply and after supply of the molten resin, a heating temperature condition setting section for setting a temperature to which the resin decorating layer of the skin material is heated, a heating temperature detecting section for detecting the heating temperature of the resin decorating layer of the skin material, heating means for heating the resin decorating layer of the skin material based on a set value of the heating temperature condition setting section and a detection signal of the heating temperature detecting section, and a clamping control section for controlling clamping means based on a set value of the clamping condition setting section.

16. The resin multilayer molding device according to claim 14 or 15 wherein the multilayer molding device uses an injection molding device.

17. The multilayer molding device according to claim 16 which comprises:

an initial setting input section for initially setting/entering as molding condition values an injection filling condition for injection filling the molten resin forming the core material into the mold cavity space and refilling a cooling/setting shrinkage quantity, a clamping condition during the injection filling, the thickness of the air insulating layer, the change-over timing condition for forming the air insulating layer, and the change-over timing condition for eliminating the air insulating layer;

a molding device control section for operating/controlling the multilayer molding device for performing resin multilayer molding based on set values of the initial setting input section, a quality determination input section for entering visual quality determination results; and

a correction program storage section for correcting the initially set molding condition values based on input values of the quality determination input section to set optimum molding conditions for preventing the resin decorating layer of the skin material being molded from being damaged.

18. The multilayer molding device according to claim 16 which comprises:

an initial setting input section for initially setting/entering as molding condition values an injection filling condition for injection filling the molten resin forming the core material into the mold cavity space and refilling a cooling/setting shrinkage quantity, a clamping condition during the injection filling, the thickness of the air insulating layer, the change-over timing for forming the air insulating layer, the change-over timing for eliminating the air insulating layer, and a heating condition for heating the resin decorating layer of the skin material using heating means;

a molding device control section for operating/controlling the multilayer molding device for performing resin multilayer molding based on set values of the initial setting input section, a quality determination input section for entering visual quality determination results; and

a correction program storage section for correcting the initially set molding condition values based on input values of the quality determination input section to set optimum molding conditions for preventing the resin decorating layer of the skin material being molded from being damaged.

19. The resin multilayer molding device according to any one of claims 14 - 18 which comprises a timer which starts at an arbitrary time during molding, and a change-over timing setting section for setting the change-over timing condition for forming the air insulating layer and the change-over timing condition for eliminating the air insulating layer in response to a time-out signal of the timer.

20. The resin multilayer molding device according to any one of claims 14 - 18 wherein means for forming the air insulating layer is incorporated into the mold.

21. The resin multilayer molding device according to any one of claims 14 — 18 wherein an insulating cavity layer is formed on the resin decorating layer of the skin material and the mold cavity face opposed to the resin decorating layer.

EP 0 997 256 A1

## FIG.1

## FIG.2

**FIG.3**

# FIG.4

POSITION
SENSOR

70

HYDRAULIC
CONTROL
VALVE

54

PRESSURE
SENSOR

56

MOLD
CLAMPING
CONTROLLER

58

MOLDING
DEVICE
CONTROLLER

66

# FIG.5

# FIG.6

## FIG.7

# FIG.8

```
┌──────────────────┐      ┌──────────┐      ┌──────────────────────┐
│     SUPPLY       │      │          │      │  GLASS TRANSITION    │
│ TEMPERATURE (Tc) │─────▶│  Tc>Tgs  │◀─────│   POINT (Tgs) OF     │
│  OF CORE-MATERIAL│      │          │      │    SKIN-MATERIAL     │
│      RESIN       │      └──────────┘      │  DECORATING LAYER    │
└──────────────────┘           │           └──────────────────────┘
                               ▼
                        ┌──────────────┐
                        │ MOLD OPENED  │
                        │    STATE     │
                        └──────────────┘
                               │
                               ▼
                        ┌──────────────┐
                        │  SET SKIN    │
                        │   MATERIAL   │
                        └──────────────┘
                               │
                               ▼
                        ┌──────────────┐
                        │   INITIAL    │
                        │  CLAMPING    │
                        └──────────────┘
                               │
                               ▼
┌──────────────────┐    ┌──────────────────┐    ┌──────────────────┐
│     DETECT       │    │ INJECTION FILLING│    │                  │
│  SKIN-MATERIAL   │◀───│   OF CORE-       │───▶│    CLAMPING      │
│ DECORATING LAYER │    │  MATERIAL RESIN  │    │  MULTI-STAGE     │
│ TEMPERATURE (Tsc)│    └──────────────────┘    │ PATTERN CONTROL  │
└──────────────────┘           │                └──────────────────┘
        │                      ▼                          │
        ▼                ┌──────────────────┐             │
┌──────────────────┐    │ PRESSURE HOLDING │             │
│   MAXIMUM        │    │  /REFILLING OF   │◀────────────┘
│ TEMPERATURE (Tsm)│───▶│  CORE-MATERIAL   │
│ OF SKIN-MATERIAL │    │     RESIN        │
│ DECORATING LAYER │    └──────────────────┘
└──────────────────┘           │
                               ▼
                         ╱──────────╲         N    ┌──────────────────┐
                        ╱  Tsm>Tgs   ╲───────────▶│  REVIEW MOLDING  │
                        ╲            ╱             │   CONDITION      │
                         ╲──────────╱             │(MOLDING INTERRUPTED)│
                               │                  └──────────────────┘
                               │ Y
```

```
                   ┌──────────────┐      ┌──────────┐
              ┌───▶│   COOLING    │◀─────│  COOLING │
              │    │  RETENTION   │      │ TIME (Ct)│
              │    └──────────────┘      └──────────┘
              │           │
              │           ▼
              │     ╱──────────╲
           N  │    ╱  TIMING    ╲
              └───╱  CONDITION   ╲
                  ╲              ╱
                   ╲──────────╱
                        │ Y                 ┌──────────────────┐
                        ▼                   │    MINIMUM       │
                  ┌──────────────┐          │ THICKNESS (Lm) OF│
                  │ MOLD OPENING │◀─────────│  SKIN-MATERIAL   │
              ┌──▶│  OPERATION   │          │ DECORATING LAYER │
              │   └──────────────┘          └──────────────────┘
              │          │                  ┌──────────────────┐
              │          ▼                  │    REQUIRED      │
              │    ╱──────────╲             │  SKIN-MATERIAL   │
           N  │   ╱  Lf-Lm≦    ╲◀───────────│ DECORATING LAYER │
              └──╱   La>0       ╲           │  THICKNESS (Lf)  │
                 ╲              ╱           └──────────────────┘
                  ╲──────────╱             ┌──────────────────┐
                        │ Y                │  AIR INSULATING  │
                        ▼                  │ LAYER THICKNESS  │
                  ┌──────────────┐         │      (La)        │
                  │RETAIN CLAMPING│◀──┐    └──────────────────┘
                  └──────────────┘   │
                        │            │
                        ▼            │
                  ╱──────────╲   N   │
                 ╱  REACH Ct  ╲──────┘
                 ╲            ╱
                  ╲──────────╱
                        │ Y
                        ▼
                  ┌──────────────┐
                  │ MOLD OPENING │
                  │OPERATION/TAKE│
                  │   PRODUCT    │
                  └──────────────┘
```

EP 0 997 256 A1

## FIG.9

SET SKIN MATERIAL → INITIAL CLAMPING

INITIAL CLAMPING → INJECTION FILLING OF CORE-MATERIAL RESIN

INJECTION FILLING OF CORE-MATERIAL RESIN → DETECT SKIN-MATERIAL DECORATING LAYER TEMPERATURE ( Tsc)

DETECT SKIN-MATERIAL DECORATING LAYER TEMPERATURE ( Tsc) → MAXIMUM TEMPERATURE ( Tsm) OF SKIN-MATERIAL DECORATING LAYER

INJECTION FILLING OF CORE-MATERIAL RESIN → CLAMPING MULTI-STAGE PATTERN CONTROL

INJECTION FILLING OF CORE-MATERIAL RESIN → PRESSURE HOLDING/REFILLING OF CORE-MATERIAL RESIN

PRESSURE HOLDING/REFILLING OF CORE-MATERIAL RESIN → DETECT CORE-MATERIAL RESIN TEMPERATURE (Tcc)

Tsm > Tgs — N → REVIEW MOLDING CONDITION (MOLDING INTERRUPTED)

Tsm > Tgs — Y → COOLING RETENTION

COOLING TIME (Ct) → COOLING RETENTION

COOLING RETENTION → TIMING CONDITION ( 1 )

TIMING CONDITION ( 1 ) — N

TIMING CONDITION ( 1 ) — Y

MOLD OPENING OPERATION

MINIMUM THICKNESS (Lm) OF SKIN-MATERIAL DECORATING LAYER → MOLD OPENING OPERATION

MOLD OPENING OPERATION → Lf − Lm ≤ La > 0

Lf − Lm ≤ La > 0 — N → MOLD OPENING OPERATION

REQUIRED SKIN-MATERIAL DECORATING LAYER THICKNESS (Lf)

AIR INSULATING LAYER THICKNESS (La )

Lf − Lm ≤ La > 0 — Y → RETAIN OPENED MOLD

RETAIN OPENED MOLD → TIMING CONDITION ( 2 )

TIMING CONDITION ( 2 ) — N

TIMING CONDITION ( 2 ) — Y → CLAMPING OPERATION

CLAMPING OPERATION → REACH Ct

REACH Ct — N

REACH Ct — Y → MOLD OPENING OPERATION/TAKE PRODUCT

## FIG.10

SET SKIN MATERIAL → INITIAL CLAMPING

INJECTION FILLING OF CORE-MATERIAL RESIN

CLAMPING MULTI-STAGE PATTERN CONTROL

PRESSURE HOLDING/REFILLING OF CORE-MATERIAL RESIN

COOLING RETENTION

TIMING COMMAND (1)  N

Y

DETECT SKIN-MATERIAL DECORATING LAYER TEMPERATURE (Tsc) ← HEAT SKIN-MATERIAL DECORATING LAYER

$Tsc \geq Tgs$  N

Y

MOLD OPENING OPERATION ← MINIMUM THICKNESS (Lm) OF SKIN-MATERIAL DECORATING LAYER

$Lf - Lm \leq La > 0$  N

REQUIRED SKIN-MATERIAL DECORATING LAYER THICKNESS (Lf)

AIR INSULATING LAYER THICKNESS (La)

Y

RETAIN OPENED MOLD

TIMING COMMAND (2)  N

Y

MOLD OPENING OPERATION/TAKE PRODUCT

EP 0 997 256 A1

## FIG.11

```
┌──────────────┐     ┌──────────────┐
│  SET SKIN    │ ──> │   INITIAL    │
│  MATERIAL    │     │  CLAMPING    │
└──────────────┘     └──────┬───────┘
                            ↓
                     ┌──────────────┐     ┌──────────────┐
                     │  INJECTION   │     │   CLAMPING   │
                     │  FILLING OF  │ ──> │  MULTI-STAGE │
                     │ CORE-MATERIAL│     │   PATTERN    │
                     │    RESIN     │     │   CONTROL    │
                     └──────┬───────┘     └──────┬───────┘
                            ↓                    │
                     ┌──────────────┐            │
                     │   PRESSURE   │            │
                     │HOLDING/REFILLING│ <───────┘
                     │OF CORE-MATERIAL│
                     │    RESIN     │
                     └──────┬───────┘
                            ↓
                     ┌──────────────┐
                     │   COOLING    │ <────┐
                     │  RETENTION   │      │
                     └──────┬───────┘      │
                            ↓              │
                         ◇─────◇           │
                        ╱ TIMING ╲  N      │
                       ◇ COMMAND (1)◇ ─────┘
                        ╲         ╱
                         ◇───┬───◇
                             │ Y
                             ↓
┌──────────────┐     ┌──────────────┐
│   DETECT     │     │    HEAT      │
│ SKIN-MATERIAL│ <── │ SKIN-MATERIAL│ <───┐
│DECORATING LAYER│   │  DECORATING  │     │
│TEMPERATURE (Tsc)│  │    LAYER     │     │
└──────┬───────┘     └──────┬───────┘     │
       │                    ↓             │
       │                 ◇─────◇          │
       └───────────>    ╱       ╲   N     │
                       ◇ Tsc ≥ Tgs ◇ ─────┘
                        ╲         ╱
                         ◇───┬───◇
                             │ Y
```

```
                     ┌──────────────┐     ┌──────────────────┐
              ┌───>  │ MOLD OPENING │ <── │ MINIMUM THICKNESS│
              │      │  OPERATION   │     │    (Lm) OF       │
              │      └──────┬───────┘     │  SKIN-MATERIAL   │
              │             ↓             │ DECORATING LAYER │
              │          ◇─────◇          └──────────────────┘
              │  N      ╱       ╲         ┌──────────────────┐
              └────── ◇ Lf-Lm ≤ La>0 ◇ ──│ REQUIRED SKIN-MATERIAL│
                       ╲         ╱        │ DECORATING LAYER │
                        ◇───┬───◇         │  THICKNESS (Lf)  │
                            │ Y           └──────────────────┘
                            ↓             ┌──────────────────┐
                     ┌──────────────┐     │ AIR INSULATING   │
              ┌───>  │   RETAIN     │ <── │ LAYER THICKNESS  │
              │      │ OPENED MOLD  │     │     (La )        │
              │      └──────┬───────┘     └──────────────────┘
              │             ↓
              │          ◇─────◇
              │  N      ╱ TIMING ╲
              └────── ◇ COMMAND (3)◇
                       ╲         ╱
                        ◇───┬───◇
                            │ Y
                            ↓
                     ┌──────────────┐
              ┌───>  │  CLAMPING    │
              │      │  OPERATION   │
              │      └──────┬───────┘
              │             ↓
              │          ◇─────◇
              │         ╱ TIMING ╲   N
              └────── ◇ COMMAND (4)◇ ──
                       ╲         ╱
                        ◇───┬───◇
                            │ Y
                            ↓
                     ┌──────────────┐
                     │ MOLD OPENING │
                     │OPERATION/TAKE│
                     │   PRODUCT    │
                     └──────────────┘
```

EP 0 997 256 A1

## FIG.12

SETTING/INPUT OF SUPPLEMENTARY MOLDING CONDITION SET VALUES
· MOLD TEMPERATURE
· CORE-MATERIAL RESIN TEMPERATURE

INITIAL SETTING/INPUT OF MOLDING CONDITION VALUES
· INJECTION FILLING CONDITION (INJECTION FILLING/PRESSURE HOLDING/REFILLING)
· CLAMPING CONDITION (INITIAL CLAMPING/CLAMPING MULTI-STAGE PATTERN)
· AIR INSULATING LAYER THICKNESS
· REQUIRED SKIN-MATERIAL DECORATING LAYER THICKNESS
· CHANGE-OVER TIMING CONDITION

MOLDING FACTOR DATA
· CAVITY CONFIGURATION
· CORE-MATERIAL RESIN PHYSICAL PROPERTIES
· SKIN MATERIAL PHYSICAL PROPERTIES
..

MOLDING TEMPERATURE DATA
· SKIN-MATERIAL DECORATING LAYER TEMPERATURE
· AIR INSULATING LAYER THICKNESS
..

CORRECTION PROGRAM

CORRECTION COMPARISON REFERENCE VALUE

CALCULATE CRITICAL CORRECTION QUANTITY

EXECUTE PROGRAM

WITHIN CRITICAL CORRECTION QUANTITY RANGE

TRIAL MOLDING

DETERMINE QUALITY

NON-DEFECTIVE

INPUT DETERMINATION RESULT
· DEFECT ITEM
· DEFECT DEGREE

CORRECTION INCREASE/DECREASE COMMAND

CORRECTION COMMAND
( REFERENCE VALUE →±CORRECTION)

INPUT NON-DEFECTIVE

FINISH SETTING OPTIMUM MOLDING CONDITIONS

ACTUAL OPERATION START

# FIG.13

## FIG.14

SUPPLY TEMPERATURE (Tc) OF CORE-MATERIAL RESIN

Tc > Tgs

GLASS TRANSITION POINT (Tgs) OF SKIN-MATERIAL DECORATING LAYER R

MOLD OPENED STATE

SET SKIN MATERIAL

INITIAL CLAMPING

START TIMER

INJECTION FILLING OF CORE-MATERIAL RESIN

CLAMPING MULTI-STAGE PATTERN CONTROL

Y

PRESSURE HOLDING/REFILLING OF CORE-MATERIAL RESIN

COOLING RETENTION

COOLING TIME (Ct)

TIMER SETTING (1)    N

Y

MOLD OPENING OPERATION

MINIMUM THICKNESS (Lm) OF SKIN-MATERIAL DECORATING LAYER

N    $Lf - Lm \leq La > 0$

REQUIRED SKIN-MATERIAL DECORATING LAYER THICKNESS (Lf)

AIR INSULATING LAYER THICKNESS (La)

Y

RETAIN OPENED MOLD

N    TIMER SETTING (2)

Y

CLAMPING OPERATION

REACH Ct    N

Y

MOLD OPENING OPERATION/TAKE PRODUCT

EP 0 997 256 A1

## INTERNATIONAL SEARCH REPORT

| International application No. |
| --- |
| PCT/JP98/02450 |

**A. CLASSIFICATION OF SUBJECT MATTER**
Int.Cl⁶ B29C45/14, B29C45/76

According to International Patent Classification (IPC) or to both national classification and IPC

**B. FIELDS SEARCHED**

Minimum documentation searched (classification system followed by classification symbols)
Int.Cl⁶ B29C45/00-45/84, B29C43/00-43/58

Documentation searched other than minimum documentation to the extent that such documents are included in the fields searched
Jitsuyo Shinan Koho       1926-1998
Kokai Jitsuyo Shinan Koho   1971-1998

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| P | JP, 10-58485, A (Ube Industries, Ltd.), 3 March, 1998 (03. 03. 98) (Family: none) | 1-21 |
| P | JP, 10-58486, A (Ube Industries, Ltd.), 3 March, 1998 (03. 03. 98) (Family: none) | 1-21 |
| A | WO, 95-17290, A (Idemitsu Petrochemical Co., Ltd.), 29 June, 1995 (29. 06. 95) | 1-21 |
| A | JP, 8-142103, A (Mitsui Toatsu Chemicals, Inc.), 4 June, 1996 (04. 06. 96) (Family: none) | 1-21 |
| A | JP, 8-72077, A (Araco Corp.), 19 March, 1996 (19. 03. 96) (Family: none) | 1-21 |
| A | JP, 8-72078, A (Araco Corp.), 19 March, 1996 (19. 03. 96) (Family: none) | 1-21 |
| A | JP, 63-9516, A (Nihon Plast Co., Ltd.), 16 January, 1988 (16. 01. 88) (Family: none) | 1-21 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 24 August, 1998 (24. 08. 98) | 1 September, 1998 (01. 09. 98) |

| Name and mailing address of the ISA/ | Authorized officer |
| --- | --- |
| Japanese Patent Office | |
| Facsimile No. | Telephone No. |

Form PCT/ISA/210 (second sheet) (July 1992)